(19) Europäisches Patentamt
European Patent Office
Office européen des brevets

(11) **EP 4 712 541 A1**

(12) **EUROPEAN PATENT APPLICATION**

(43) Date of publication:
**18.03.2026 Bulletin 2026/12**

(21) Application number: **25200942.8**

(22) Date of filing: **09.09.2025**

(51) International Patent Classification (IPC):
*H04W 24/02* (2009.01)    *H04W 52/02* (2009.01)

(52) Cooperative Patent Classification (CPC):
**H04W 24/02; H04W 52/0206**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.09.2024  IN 202411069550**

(71) Applicant: **Nokia Solutions and Networks Oy
02610 Espoo (FI)**

(72) Inventors:
• **Nanavaty, Niraj
560037 Bangalore (IN)**
• **Filippou, Miltiadis
11141 Athens (GR)**

(74) Representative: **Kolster Oy Ab
Salmisaarenaukio 1
P.O. Box 204
00181 Helsinki (FI)**

(54) **ENERGY ACCOUNTING OF NETWORK NODES IN RADIO ACCESS NETWORKS**

(57)    Approaches for energy accounting of network nodes in a Radio Access Network (RAN), such as an Open RAN, are described. In an example, a first value corresponding to energy consumed in implementation and during operation of one of an AI and a ML pipeline at a first network node of a RAN may be obtained. Thereafter, an estimate of energy saving for the first network node may be determined by comparing energy usage before and after executing a decision based on an inference of one of an AI and ML model deployed at the first network node. Based on the first value and the estimate of energy saving for the first network node, a measure of net energy may be computed. In response to the computed measure, a pre-defined action may be executed.

```
NETWORK APPARATUS 100
  PROCESSOR(S) 102

  MACHINE-READABLE STORAGE MEDIUM 104
    INSTRUCTION(S) 106
      OBTAIN A FIRST VALUE CORRESPONDING TO ENERGY
      CONSUMED IN IMPLEMENTATION AND DURING OPERATION OF
      ONE OF AN ARTIFICIAL INTELLIGENCE (AI) AND A MACHINE
      LEARNING (ML) MODEL PIPELINE AT A FIRST NETWORK NODE
      OF A RADIO ACCESS NETWORK (RAN) 108

      DETERMINE AN ESTIMATE OF ENERGY SAVING FOR THE
      FIRST NETWORK NODE BY COMPARING ENERGY USAGE
      BEFORE AND AFTER EXECUTING A DECISION BASED ON AN
      INFERENCE OF THE ML MODEL DEPLOYED AT THE FIRST
      NETWORK NODE 110

      COMPUTE A MEASURE OF NET ENERGY BASED ON THE FIRST
      VALUE AND THE ESTIMATE OF ENERGY SAVING FOR THE
      FIRST NETWORK NODE 112

      EXECUTE A PRE-DEFINED ACTION IN RESPONSE TO THE
      COMPUTED MEASURE OF ENERGY SAVINGS 114
```

FIG. 1

EP 4 712 541 A1

## Description

TECHNICAL FIELD

Various examples described herein relate to approaches for energy accounting of network nodes in a Radio Access Network (RAN), such as an Open RAN.

BACKGROUND

Radio Access Networks (RANs) are evolving rapidly to meet the growing demands of users, particularly in terms of higher data rates and lower latency. The current generation of RANs, known as Fifth Generation (5G) networks, employs a diverse array of devices with varying capabilities to serve dynamically changing traffic flows. This evolution is driven by the need to support an ever-increasing range of applications and services, from enhanced mobile broadband to massive Internet of Things (IoT) deployments and ultra-reliable low-latency communications. To effectively manage the increasing volume of communication and computation required by evolving networking applications in 5G RANs, artificial intelligence (AI)/machine learning (ML) models are being deployed throughout the network infrastructure.

SUMMARY

Aspects of the present subject matter relate to energy accounting of network nodes in a Radio Access Network (RAN). In an example, a method for performing energy accounting of a network node in the RAN is described. The method comprises obtaining a first value corresponding to energy consumed in implementation and during operation of one of an Artificial Intelligence and a Machine Learning (ML) pipeline at a first network node of a Radio Access Network (RAN). Further, the method comprises determining an estimate of energy saving for the first network node by comparing energy usage before and after executing a decision based on an inference of one of an AI and ML model deployed at the first network node. The method also comprises computing a measure of net energy based on the first value and the estimate of energy saving for the first network node and executing a pre-defined action in response to the computed measure of the net energy.

In an example, obtaining the first value comprises obtaining a second value corresponding to change in energy consumption by a second network node in communication with the first network node. The second value is obtained pursuant to the implementation and operation of one of the AI and the ML pipeline at the first network node.

In another example, the first value is associated with pre-defined parameters comprising a ML model ID, a source entity ID, a target entity ID, a model-related operation ID, a data-related operation ID, an actor-related ID, an actor's decision related ID, application ID, a timestamp, an interface ID, and a protocol ID.

In yet another example, one of the AI and the ML pipeline comprises a plurality of sequenced stages for implementing the AI or the ML model at the first network node.

In an example, obtaining the first value comprises determining energy consumed at each of the plurality of sequenced stages of one of the AI and the ML pipeline at the first network node. Further, obtaining the first value comprises determining energy consumed at each of a plurality of lifecycle stages of an application configured to monitor the energy consumption of one of the AI or the ML pipeline, deployed in the first network node. Thereafter, obtaining the first value comprises aggregating the energy consumed at each of the plurality of sequenced stages of one of the AI or the ML pipeline and the energy consumed at each lifecycle stage of the application to obtain the first value.

In still another example, the plurality of sequenced stages comprises a data collection stage, a model training stage, and an inference stage, as well as a model performance monitoring stage and a model maintenance stage.

In another example, the plurality of lifecycle stages of the application comprises an onboarding stage, a registration stage, an update stage, a migration stage, and a de-registration stage.

In another example, performing the pre-defined action comprises determining occurrence of an event based on the measure of the net energy. The event is indicative of a situation where the energy consumption is more than the energy savings. Further, performing the pre-defined action comprises initiating a corrective action associated with the AI or ML model when the event meets pre-defined criteria.

In an example, a network apparatus for performing energy accounting of a network node in the RAN is described. The network apparatus comprises at least one processor and at least one memory storing instructions that, when executed by the at least one processor, cause the network apparatus to obtain a first value corresponding to energy consumed in implementation and during operation of one of an Artificial Intelligence and a Machine Learning (ML) pipeline at a first network node of a Radio Access Network (RAN). Further, the network apparatus is to determine an estimate of energy saving for the first network node by comparing energy usage before and after executing a decision based on an inference of one of an AI and ML model deployed at the first network node. The network apparatus is to compute a measure of net energy based on the first value and the estimate of energy saving for the first network node. In addition, the network apparatus is to execute a pre-defined action in response to the computed measure of the net energy.

In an example, to obtain the first value, instructions executable by the processor, are to further obtain a second value corresponding to change in energy consumption by a second network node in communication with the first network node. The second value is obtained pursuant to the implementation and operation of one of the AI and the ML pipeline at the first network node.

In another example, the first value is associated with pre-defined parameters comprising a ML model ID, a source entity ID, a target entity ID, a model-related operation ID, a data-related operation ID, an actor-related ID, an actor's decision related ID, an application ID, a timestamp, an interface ID, and a protocol ID.

In yet another example, one of the AI and the ML pipeline comprises a plurality of sequenced stages for implementing the AI or the ML model at the first network node.

In another example, to obtain the first value, instructions executable by the processor, are to further determine energy consumed at each of the plurality of sequenced stages of one of the AI and the ML pipeline at the first network node. The instructions are to determine energy consumed at each of a plurality of lifecycle stages of an application configured to monitor the energy consumption of one of the AI and the ML pipeline, deployed in the first network node. In addition, the instructions are to aggregate the energy consumed at each of the plurality of sequenced stages of one of the AI and ML pipeline and the energy consumed at each lifecycle stage of the application.

In an example, the plurality of sequenced stages comprises a data collection stage, a model training stage, and an inference stage, as well as a model performance monitoring stage and a model maintenance stage.

In another example, the RAN is an open RAN (O-RAN) and the model training stage and the inference stage are performed by one of a non-real time (NRT) RIC and a near-real time (nRT) RIC of the O-RAN.

In yet another example, the RAN is an open RAN (O-RAN) and the model training stage is performed by a non-real time (NRT) RIC of the O-RAN and the inference stage is performed by a near-RT (nRT) RIC of the O-RAN.

In still another example, to perform the pre-defined action, instructions executable by the processor, are further based on the measure of the net energy, determine occurrence of an event, wherein the event is indicative of a situation where the energy consumption is more than the energy savings. The instructions are to initiate a corrective action associated with the AI or the ML model when the event meets pre-defined criteria. Other instructions are to accelerate model training by stopping the training process at an earlier stage.

In another example, a non-transitory computer readable medium for performing energy accounting of a network node in the RAN is described. The non-transitory computer readable medium comprises computer-readable instructions which when executed by a processor, causes a network apparatus to obtain a first value corresponding to energy consumed in implementation and during operation of one of an Artificial Intelligence and a Machine Learning (ML) pipeline at a first network node of a Radio Access Network (RAN). The computer-readable instructions cause the network apparatus to determine an estimate of energy saving for the first network node by comparing energy usage before and after executing a decision based on an inference of one of an AI and ML model deployed at the first network node. Further, the computer-readable instructions cause the network apparatus to compute a measure of net energy based on the first value and the estimate of energy saving for the first network node. In addition, the computer-readable instructions cause the network apparatus to execute a pre-defined action in response to the computed measure of the net energy.

In an example, to obtain the first value, instructions executable by the processor, cause the network apparatus to obtain a second value corresponding to change in energy consumption by a second network node in communication with the first network node. The second value is obtained pursuant to the implementation and operation of one of the AI and the ML pipeline at the first network node.

In another example, to perform the pre-defined action, instructions executable by the processor, cause the network apparatus to be based on the measure of the net energy, determine occurrence of an event, wherein the event is indicative of a situation where the energy consumption is more than the energy savings. The instructions also cause the network apparatus to initiate a corrective action associated with the AI or the ML model when the event meets pre-defined criteria. Other instructions are to accelerate model training by stopping the training process at an earlier stage.

BRIEF DESCRIPTION OF THE DRAWINGS

The following detailed description references the drawings, wherein:

FIG. 1 illustrates a network apparatus for accounting energy of network nodes in a Radio Access Network (RAN), in accordance with an example of the present subject matter;
FIG. 2 illustrates an exemplary open RAN network architecture, in accordance with an example of the present subject matter;
FIG. 3 is a block diagram of a network apparatus to account energy of network nodes in a Radio Access Network (RAN), in accordance with an example of the present subject;
FIG. 4 illustrates a call flow diagram for facilitating energy accounting of network nodes in a Radio Access Network (RAN), in accordance with an example of the present subject matter;

FIG. 5 illustrates a call flow diagram depicting monitoring of energy consumption during a data stage of AI/ML pipeline, in accordance with another example of the present subject matter;

FIGS. 6A and 6B illustrate call flow diagrams depicting monitoring of energy consumption during a model stage of AI/ML pipeline, in accordance with an example of the present subject matter;

FIG. 7 illustrates a call flow diagram depicting monitoring of energy consumption during execution stage of AI/ML pipeline for cell/carrier switch on/off use case, in accordance with an example of the present subject matter;

FIG. 8 illustrates a call flow diagram depicting monitoring of energy consumption during execution stage of AI/ML pipeline for RF Channel reconfiguration use case, in accordance with an example of the present subject matter;

FIGS. 9A and 9B illustrate a call flow diagram depicting monitoring of energy consumption during execution stage of AI/ML pipeline for ASM optimization use case, in accordance with an example of the present subject matter;

FIG. 10 is a flowchart depicting an example method for accounting energy of network nodes in a Radio Access Network (RAN), in accordance with an example of the present subject matter;

FIG. 11 is a flowchart depicting another example method for accounting energy of network nodes in a Radio Access Network (RAN), in accordance with an example of the present subject matter; and

FIG. 12 illustrates an example system environment for accounting energy of network nodes in a Radio Access Network (RAN), in accordance with an example of the present subject matter.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

DETAILED DESCRIPTION

With the evolution of mobile networks, network operators face increasing pressure to reduce energy consumption and operational costs. While Artificial Intelligence (AI) and Machine Learning (ML) models offer promising solutions for optimizing energy consumption in radio access networks (RANs) such as 5G, 6G, and Open RAN (O-RAN), their implementation introduces significant energy overhead that is often overlooked. For example, an AI/ML pipeline in network operations is complex, encompassing multiple stages including training, inference, feedback data collection, storage, processing and transfer model training, inference, storage, transfer, performance monitoring, maintenance, also including action execution as part of the framework including the AI/ML pipeline toward addressing a use case. Each of these stages contributes to the network's energy consumption. While some AI/ML-driven decisions, such as cell deactivation, may lead to substantial energy savings, these occurrences are infrequent. Conversely, many AI/ML inferences may not yield energy benefits yet still consume power to generate them, potentially negating the intended energy-saving benefits.

Current energy monitoring techniques for RANs lack the capability to comprehensively log and track the total energy consumed by deployed AI/ML pipelines and their associated processes. The existing energy monitoring techniques do not consider a ripple effect of energy consumption when an AI/ML model deployed on one network entity influences the operation and energy usage of other connected entities. Moreover, the existing energy monitoring techniques do not provide detailed breakdowns of energy consumption at granular levels for specific AI/ML operations or model components.

Furthermore, the lack of standardized mechanisms for comprehensive energy accounting across various AI/ML components in current O-RAN specifications exacerbates the problem. This absence of standardization hinders network operators' ability to accurately assess the net energy impact of deployed AI/ML pipelines, making it challenging to make informed decisions about their effectiveness and efficiency. Thus, the existing energy monitoring techniques provide an incomplete picture of true energy consumption associated with AI/ML deployments in RANs.

According to examples of the present subject matter techniques for computing a measure of energy savings due to the implementation of the AI/ML pipeline in RANs is described.

In an example, a first value corresponding to energy consumed in implementation and during operation of an AI/ML pipeline at a first network node of a RAN may be obtained. In an example, the RAN may be a 5G RAN, a 6G RAN, an open RAN, and so on. The AI/ML pipeline may include a plurality of sequenced stages for implementing the AI/ML model within the first network node for the needs of addressing a use case or to solve an optimization problem. For example, the plurality of sequenced stages may include a data stage, a model stage, and an action execution stage. Each of the plurality of sequenced stages may further include sub-stages that for which the energy consumption is measured by the energy accounting system.

In an example, the first value may also encompass a second value corresponding to change in energy consumption by a second network node in communication with the first network node. The change in the energy consumption at the second network node may be caused as a result of executing a decision based on one or more inferences of the ML model deployed at the first network node. In another example, determination of the first value may also include determining energy consumed at each of a plurality of lifecycle stages of an application (rApp or xApp) configured to monitor the energy consumption of the ML model. The application may be deployed in the first network node. Examples of the plurality of lifecycle stages of an application include, but are not limited to, onboarding, instantiation, update, migration, and decommissioning.

Further, once the energy consumption is determined, an estimate of energy saving for the first network node may be determined. In an example, the estimate of energy saving by comparing energy usage before and after executing a decision based on an inference of the ML model deployed at the first network node.

Based on the first value and the estimate of energy saving, a measure of net energy may be computed. In an example, the measure of net energy is computed by subtracting the first energy value from the estimated energy saving. A positive value of the measure of the net energy may indicate a profit in the net energy whereas a negative value of the measure of the net energy may indicate a loss in the net energy. Based on the measure of net energy, a pre-defined action may be executed at the first network node.

Accordingly, the present subject matter describes techniques implemented by one or more network entities, for measuring overall energy impact of implementing AI/ML models in RANs. For example, the first value may account for energy consumed throughout the entire AI/ML pipeline, including data collection, training, feedback, and inference stages. In addition, the first value may factor in energy changes at connected or neighbouring network nodes. Thus, the present subject matter captures a holistic view of energy consumption across the network. The energy consumption may then be balanced against the estimated energy savings achieved through AI/ML-driven decisions. This results in a more accurate measure of net energy, allowing network operators to make informed decisions about the effectiveness and sustainability of their ML deployments autonomously. Accordingly, the present subject matter enables network operators to accurately assess the energy efficiency of their AI/ML implementations across 5G, 6G, and Open RAN architectures autonomously.

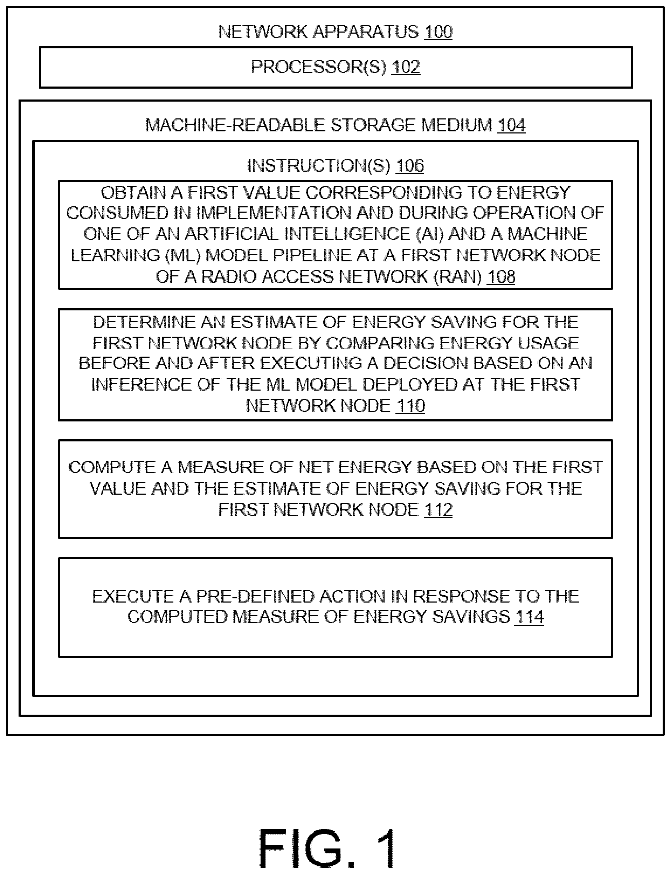

FIG. 1 illustrates a network apparatus 100, which amongst other functions is to perform accounting of energy of network nodes in a Radio Access Network (RAN), as per an example of the present subject matter. The network apparatus 100, as will be explained further, may be any system within a communication network. Examples of such a system includes, but is not limited to, both a wireless communication device and/or a base station. Further, examples of the RAN may include, but are not limited to, a 5G RAN, 6G RAN, and open RAN (O-RAN). In the context of O-RAN, a network node may be a Non-Real Time (NRT) RAN Intelligent Controller (RIC), a near Real Time (nRT) RIC, an E2 node, such as an open Radio Unit (O-RU), an open Distribution Unit (O-DU), and so on.

The network apparatus 100 includes a processor 102 and a machine-readable storage medium 104 which is coupled to, and accessible by, the processor 102. The network apparatus 100 may be implemented in any network apparatus or system, within a communication network, and implemented using one or more computing resources. Although not depicted, the network apparatus 100 may include other components, such as interfaces to communicate over the network or with other network apparatus and systems, input/output interfaces, and other logic or hardware components, all of which although have not been depicted may be present in such other examples.

In an example, the processor 102 may fetch and execute instructions 106. In one example, as a result of the execution of the instructions 108, a first value corresponding to energy consumed in implementation and during operation of one of an Artificial Intelligence (AI) and a Machine Learning (ML) pipeline at a first network node of a RAN may be obtained. The one of the AI and ML pipeline may include various stages such as a data collection stage, a data processing stage, a data storage and transfer stage, a model training stage, a model deployment stage, a model storage stage, a model inference stage, a model feedback stage, an action execution and decision-making stage.

In an example, the first value may be associated with pre-defined parameters, such as but not limited to, a ML model ID, a source entity ID, a target entity ID, a model-related operation ID, a data-related operation ID, an actor-related ID, an actor's decision related ID, an application ID, a timestamp, an interface ID, and a protocol ID.

Once the energy consumed is determined, the instructions 110 may be executed. As a result of the execution of the instructions 110, an estimate of energy saving for the first network node may be determined. In an example, the estimate of energy saving may be determined by comparing energy usage at the first network node before implementing an AI or ML model and energy usage at the first network node after executing a decision based on an inference of the AI or ML model deployed at the first network node.

Thereafter, the instructions 112 may be executed, as a result of which a measure of net energy based on the first value and the estimate of energy saving for the first network node may be computed. In an example, the measure of net energy is computed by subtracting the first value from the estimated energy saving. A positive value of the net energy may indicate a profit in the net energy whereas a negative value of the net energy may indicate a loss in the net energy.

Accordingly, the instructions 114 may be executed, as a result of which a pre-defined action in response to the computed measure of the net energy may be executed. For example, in case of the negative value of the net energy, the pre-defined action may include initiating a corrective action associated with the AI or ML model. The corrective action may include re-training the AI or ML model, training the AI or ML model based on less data of higher quality, decommissioning the AI or ML model, AI or ML model training acceleration, and so on. These and other examples are further discussed in conjunction with other figures.

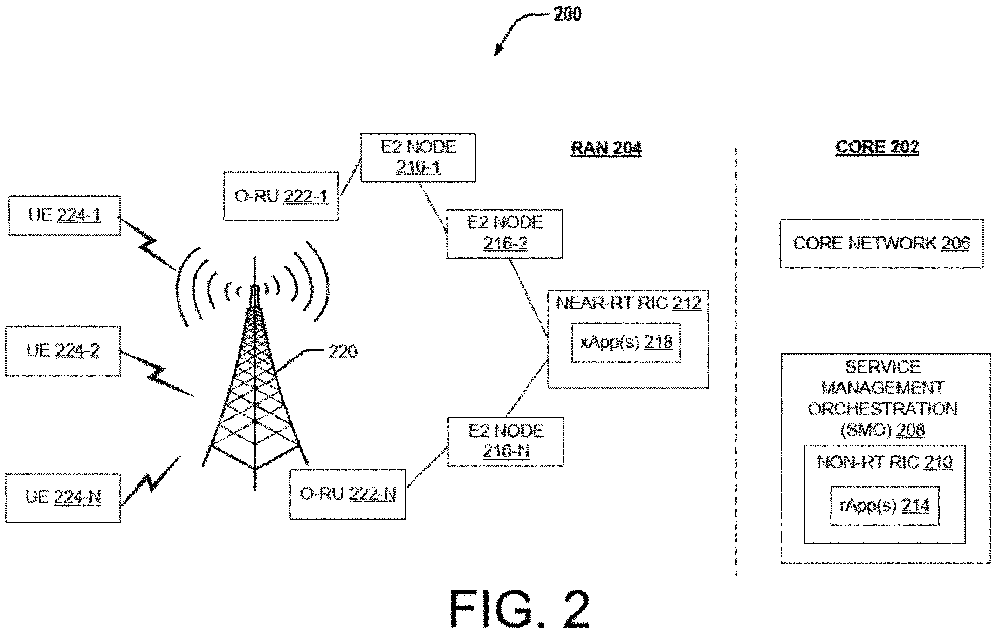

FIG. 2 illustrates an exemplary open RAN (O-RAN) environment 200, in accordance with an example of the present subject matter. The O-RAN environment 200 may include a core 202 and a RAN 204. The core 202 may include a management portion of the network and comprises at least a core network 206 and a service management and orchestration framework (SMO) 208. In an example, the core network 206 may be a 5G core network, a Voice over LTE (VoLTE) core network, a Distributed Core Network (DCN), a Satellite Core Network, an evolved packet core (EPC) network, a NextGen Packet Core (NPC) network, or some other type of core network.

Further, the SMO 208 is responsible for managing and orchestrating the overall network services and functions. The SMO 208 may include a non-Real Time (RT) RAN Intelligent Controller (RIC) 210. The primary goal of non-RT RIC 210 is to support intelligent radio resource management for a non-real-time interval, policy optimization in RAN, and insertion of AI/ML models to a near-RT RIC 212 and other RAN functions. The policy optimization may include energy consumption monitoring, energy saving determination, AI/ML model selection and re-training, and so on. As per the O-RAN architecture, an O1 interface is established between the SMO 208 (including the non-RT RIC 210) and the RAN components, facilitating configuration management and performance management. In addition, the non-RT RIC 210 may enable non-real-time control of RAN elements and their resources through specialized applications called rApps 214.

In an example, the core network 206 is shown to be communicatively coupled to the RAN 204. The RAN 204 includes the near-RT RIC 212 that enables near-real-time optimization and control and data monitoring of a plurality of E2 nodes 216-1, 216-2,..., 216-N (collectively referred to as the E2 nodes 216), such as O-CU and O-DU nodes in near-RT timescales (between 10 ms and 1 s). The near-RT RIC 212 may control various RAN elements and their resources with optimization actions that typically take 10 milliseconds to one second to complete. The near-RT RIC 212 may receive policy guidance from the non-RT RIC 210 and provides policy feedback to the non-RT RIC 210 through specialized applications called xApps 218.

In an example, the E2 nodes 216 may represent disaggregated RAN components in the O-RAN architecture. The E2 nodes 216 are positioned between a base station 220 and the near-RT RIC 212. Therefore, the E2 nodes 216 serve as intermediaries, facilitating the flow of data and control information within the RAN 204. In the O-RAN architecture, E2 interface is established between the E2 Nodes 216 and the near-RT RIC 212, allowing for near-real-time control and optimization.

Further, the RAN 204 may include a plurality of open radio units (O-RU) 222-1, ..., 222-N (collectively referred to as O-RUs 222). The E2 nodes 216 may receive and interpret configuration instructions from higher-level components, like the near-RT RIC 212 and may be responsible for updating configurations of lower-level components, like O-RUs 222. Further, the base station 220 may include antennas for facilitating wireless transmission and reception, interfacing directly with a plurality of user equipments (UEs) 224-1, 224-2, ...., 224-N (collectively referred to as the UEs 224).

As per the present subject matter, each network entity, e.g., UEs 224, base station 220, E2 nodes 216, near RT-RIC 212, non-RT RIC 210, and so on may be capable of reporting logged energy measurements to related next network node in a chain. For example, for a UE 224-1, the base station 220 is the next node and for the base station 220, the SMO 208 is the next node. Therefore, in an example, each involved network entity may support an Energy Accounting Function (EAF) to separately log and associate different energy components of pertaining to total energy consumption and energy savings, for computing a net energy. In an example, the energy accounting may be applicable to all possible AI/ML model deployments in the network.

The O-RAN based architecture as depicted in FIG. 2 allows for greater flexibility, openness, and intelligence in the network, enabling advanced features such as AI/ML-driven optimization, energy efficiency management, and dynamic resource allocation across the RAN components.

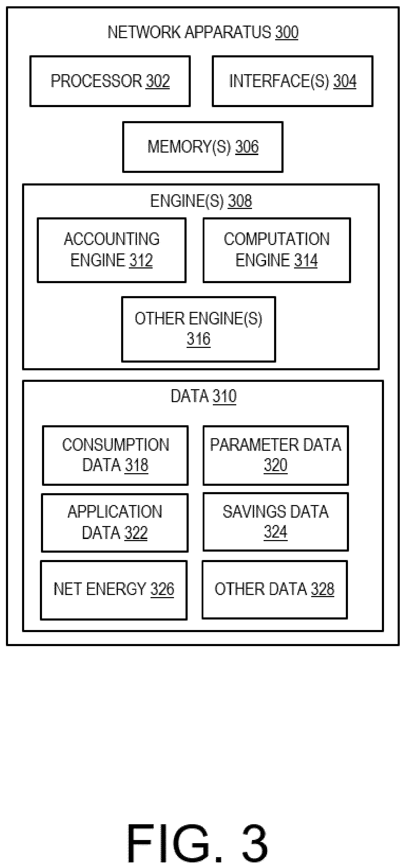

FIG. 3 is a block diagram of a network apparatus 300 to account energy of network nodes in a Radio Access Network (RAN), as per an example of the present subject. The network apparatus 300 is similar to the network apparatus 100. In an example, the network apparatus 300 may be a RAN Intelligent Controller (RIC), an E2 node, a distributed unit, a radio unit, and so on. In an example, the network apparatus 300 may be configured to implement a virtual network function (VNF) or a cloud network function (CNF) for energy accounting in a RAN. Returning to the present example, the network apparatus 300 includes a processor 302, interface(s) 304 and memory(s) 306. The processor 302 may be implemented as microprocessors, microcomputers, microcontrollers, digital signal processors, central processing units, state machines, logic circuitries, and/or other devices that manipulate signals based on operational instructions.

The interface(s) 304 may allow the connection or coupling of the network apparatus 300 with one or more other devices (say other network entities or a user equipment) within a communication network environment, or with other computing devices through a wired (e.g., Local Area Network, i.e., LAN) connection or through a wireless connection (e.g., Bluetooth®, Wi-Fi, Integrated Access & Backhaul (IAB), Microwave). The interface(s) 304 may also enable intercommunication between different logical as well as hardware components of the network apparatus 300. In an example, the interface(s) 304 may be implemented as either hardware or software.

The memory(s) 306 may be a computer-readable medium, examples of which include volatile memory (e.g., RAM), and/or non-volatile memory (e.g., Erasable Programmable read-only memory, i.e., EPROM, flash memory, etc.).

The memory(s) 306 may be an external memory, or internal memory, such as a flash drive, a compact disk drive, an external hard disk drive, or the like. The memory(s) 306 may further include data which either may be utilized or generated during the operation of the network apparatus 300.

The network apparatus 300 may further include engine(s) 308 and data 310. The engine(s) 308 may be implemented as a combination of hardware and programming, for example, programmable instructions to implement a variety of functionalities of the engine(s) 308. In another example, the engine(s) 308 may be implemented as electronic circuitry or as specifically adapted and/or programmed hardware. In examples described herein, such combinations of hardware and/or programming may be implemented in several different ways. For example, the programming for the engine(s) 308 may be executable instructions. Such instructions may be stored on a non-transitory machine-readable storage medium which may be coupled either directly with the network apparatus 300 or indirectly (for example, through networked means). In an example, the engine(s) 308 may include a processing resource, for example, either a single processor or a combination of multiple processors, to execute such instructions. In the present examples, the non-transitory machine-readable storage medium may store instructions that, when executed by the processing resource, implement engine(s) 308. Although not depicted, the network apparatus 300 may include other components as well without deviating from the scope of the present subject matter.

The engine(s) 308 includes an accounting engine 312, a computation engine 314, and other engine(s) 316. The other engine(s) 316 may further implement functionalities that supplement functions performed by the network apparatus 300 or the engine(s) 308. The data 310, on the other hand, includes data that is either stored or generated as a result of functions implemented by any of the engine(s) 308 of the network apparatus 300. It may be further noted that information stored and available in data 310 may be utilized by the engine(s) 308 for performing various functions by the network apparatus 300. In an example, data 310 may include consumption data 318, parameter data 320, application data 322, savings data 324, net energy 326, and other data 328. It may be noted that such examples are only indicative. The present approaches may be applicable to other examples without deviating from the scope of the present subject matter.

In operation, the energy accounting engine 312 may be configured to obtain a first value corresponding to energy consumed in implementation and during operation of the AI/ML pipeline at the first network node of the RAN, such as the O-RAN. The first network node may be any network entity in the RAN. Examples of the first network node may include but are not limited to Open Radio Unit (O-RU), Open Distribution Unit (O-DU), Open Central Unit (O-CU), eNB, gNB, Radio Network Controller (RNC), RAN Intelligent Controller (RIC), and so on. To obtain the first value, the energy accounting engine 312 may separately measure and log energy consumption at every operation in AI/ML pipeline at the first network node.

In an example, the AI/ML pipeline may include a plurality of sequenced stages for implementing the AI/ML model at the first network node. The plurality of sequenced stages may indicate various stages designed to build, train, and deploy AI or ML models. For example, the plurality of sequenced stages may include a data stage, a model stage, and an execution stage. In an example, during the data stage, measurements are performed for energy consumed during various data related operations. Examples of the data related operations may include, during the training stage, training data collection triggered by a certain actor, training data collection by a data source (including retrieval of historical data), training data transfer from a data source to a data collection function (only performed when the data source and data collection function are not same), unprocessed training data storage at data collection function, training data transfer from the data collection function to the model training function (optional. Include only if data collection function and model training function are NOT the same). Includes feedback from Actor as well. training data preparation (pre-processing and cleaning, formatting, and transformation i.e., to prepare the data for the training) at model training function.

Further, during the inference stage, data collection may include inference data collection by the data source, inference data transfer from the data source to the data collection function (only when data source and data collection function are NOT the same), unprocessed inference data storage at data collection function, inference data transfer from the data collection function to the model inference function (only when data collection node and inference node are NOT the same), inference data preparation (pre-processing and cleaning, formatting, and transformation i.e., to prepare the data for the inference) at model inference function.

For ground truth data, data collection may include ground truth data collection trigger by a certain Actor, ground truth data collection by the data source, ground truth data transfer from the data source to the data collection node (only when data source and data collection node are NOT the same), unprocessed ground truth data storage at data collection function, ground truth data transfer from the data collection node to the node verifying ground truth against the inference output (only when these nodes are NOT the same), ground truth data preparation (pre-processing and cleaning, formatting, and transformation i.e., to prepare the data for verification against the inference output) at model inference function.

Further, energy consumption may be measure at the model stage for various model-related operations. Examples of such operations may include a model training stage (all training cycles), a model deployment/update stage, a model storage stage, a model inference stage, a model performance feedback preparation (ground truth verification against the inference output) stage, and a model performance feedback transfer stage. In addition, during the execution or actor stage, includes measuring energy consumed during actor-related operation, such as an action execution stage where action is taken by Actor (e.g., NG-RAN node). Thus, the accounting engine 312 is to determine energy consumption during implementation and operation of AI/ML pipeline.

To do so, the accounting engine 312 may calculate the energy consumed at each of the plurality of sequential stages, such as the data stage, the model stage, and the actor stage, as indicated in the below equations:

$$E_D = \sum_{\forall applicable\ i,j,k,l} E_{Di,j,k,l}$$

$$E_M = \sum_{\forall applicable\ i,j,k,l} E_{Mi,j,k,l}$$

$$E_A = \sum_{\forall applicable\ i,j,k,l} E_{Ai,j,k,l}$$

where Mi denotes the model-related operation (e.g., model training), Di denotes the data-related operation (e.g., data transfer), Ai denotes the action taken by the actor (e.g., cell de-activation), j denotes the involved interface (i.e., O1) or takes the value of zero in case of local operation (e.g., model training), as applicable to the respective domains (i.e., model, data, actor), k denotes the source entity (e.g., O-RU, O-DU, Near-RT RIC, rApp, xApp, Non-RT RIC, SMO) as applicable to the respective domains (i.e., model, data, actor), l denotes the target entity (e.g., O-RU, O-DU, Near-RT RIC, rApp, xApp, Non-RT RIC, SMO) as applicable to the respective domains (i.e., model, data, actor). In an implementation, the accounting engine 312 may store the parameters as the parameter data 320.

In an example, to measure or estimate energy quantity $E_{Mi,j,k,l}$, $E_{Di,j,k,l}$ or $E_{Ai,j,k,l}$, multiple methods may be used. One such method may include using a look up table. For example, a table with related energy quantity values may be created and stored in a database. The table may be created e.g., based on testing results, based on field observations and so on. In another example, energy consumption may be measured by observing (a) pre-operation energy level and (b) post-operation energy level. The energy consumed during the operation may therefore be obtained by performing (a)-(b). Other examples of measuring energy may be used, without deviating from the scope of the present subject matter.

In addition to the above-mentioned parameters, the energy accounting engine 312 may calculate energy consumption at granular levels, such as protocols within a protocol stack implementing an interface. Thus, additional parameters, such as an actor's decision related ID, a timestamp, an interface ID, and a protocol ID may be added for calculating energy consumption at different sequential stages of the AI/ML pipeline. The accounting engine 312 may store the energy consumption calculated at different stages as the consumption data 318.

In an implementation, the energy accounting engine 312 may obtain a second value corresponding to change in energy consumption by a second network node ($E_{second\ value}$) in communication with the first network node. The second value may be obtained pursuant to the implementation and operation of one of the AI and the ML pipeline at the first network node. For example, energy consumed by the second network mode prior ($E_{prior}$) to the decision of the AI/ML model at the first network node may be measured. Thereafter, the energy consumption at the second network node post ($E_{post}$) the decision of the AI/ML model at the first network node are measured. Thus, the changed (highly likely increased) energy consumption at the second network node may be determined as:

$$E_{second\ value} = E_{post} - E_{prior}$$

In an example scenario, the AI/ML model at the first network node may determine that certain data processing tasks should be offloaded to edge devices for improved efficiency. As a result, the first network node reduces its computational load and energy consumption. However, this decision causes an increase in data traffic and processing requirements at the second network node, which serves as an edge computing hub.

As a result, the second network node now has to handle additional data processing tasks, resulting in increased CPU usage, memory consumption, and network activity. This may lead to a significant rise in energy consumption at the second network node. The extra energy consumed by the second network node for processing the offloaded tasks, managing increased network traffic, and potentially scaling up its resources to handle the additional workload is considered by the energy accounting engine 312 while computing the first input value.

In another implementation, the accounting engine 312 may include the energy consumed for lifecycle management of applications ($E_{App}$) that may run on the RAN architecture to enhance network functionality and management, such as analysing the energy consumption patterns of different network elements. In the context of O-RAN architecture, such applications may be an rApp and an xApp that run on a Non-Real-Time (Non-RT) RIC and a near Real-Time RIC, respectively. In an example, the plurality of lifecycle stages of an application comprises an onboarding stage, a registration stage, an update stage, a migration stage, and a de-registration stage. In an implementation, the accounting engine 312 may store the energy consumed for lifecycle management of applications as the application data 322.

Accordingly, the accounting engine 312 may compute the first value corresponding to the energy consumed in the network during implementation and operation of the AI/ML pipeline as:

$$E_{first\ value} = E_D + E_M + E_A + E_{App} + E_{second\ value}$$

Once the energy consumption across the network is determined, the accounting engine 312 may determine an estimate of energy saving for the first network node. In an example, the accounting engine 312 may compare energy usage at the first network node before and after executing a decision based on an inference of one of an AI and ML model deployed at the first network node.

In an example, consider the first network node as an eNodeB, a base station in LTE network, equipped with one or more AI/ML models. To determine the estimate of energy savings at the first network node, the accounting engine 312 may measure energy consumption of the eNodeB over a certain period when eNodeB is operating under normal conditions. Based on the inferences from the deployed AI/ML models, the eNodeB may make changes to its operations. For example, the eNodeB may reduce power usage during periods of low network traffic or optimize resource allocation to reduce unnecessary energy consumption. Thereafter, the accounting engine 312 may measure the energy consumption of the eNodeB over a similar period after the changes have been implemented. Although the first network node has been described as an eNodeB in the LTE network, the first network node may be a gNodeB in a 5G network. The accounting engine 312 may compare the energy consumption measurements before and after the implementation of the AI/ML-driven optimization to determine the estimate of energy saved. In an implementation, the accounting engine 312 may store the estimate of energy saving as the savings data 324.

In an example, the computation engine 314 may compute a measure of net energy based on the first value and the estimate of energy saving for the first network node. For example, the computation engine 314 may compute a measure of net energy by subtracting the first value from the estimated energy saving. Such calculation may provide a quantitative assessment of the overall energy impact of the AI/ML model's decision. A positive value of net energy may indicate a profitable energy saving, suggesting that the implemented changes based on decision of the AI/ML model have effectively reduced energy consumption beyond the energy cost of the AI/ML pipeline itself. Conversely, a negative value of net energy may signify an energy loss, implying that the energy consumed by the AI/ML pipeline exceeds the savings achieved. In an implementation, the computation engine 314 may store the measure of the net energy as the net energy 326.

Further, the computation engine 314 may execute a pre-defined action in response to the computed measure of the net energy. The pre-defined action may include one or more of further optimizations of the AI/ML model if the net energy is positive, or reverting changes and reassessing strategies if the net energy is negative. In an example, based on the measure of the net energy, the computation engine 314 may determine occurrence of an event. The event may be indicative of a situation where the energy consumption is more than the energy savings, i.e., negative value of net energy. In case of the negative net energy, the computation engine 314 may initiate a corrective action associated with the AI/ML model when the event meets pre-defined criteria. For example, if net energy is negative for 3 consecutive measurements, the computation engine 314 may decommission the AI/ML model.

Accordingly, the present subject matter provides advanced energy analytics capabilities for 5G and beyond Radio Access Networks (RANs), offering visibility into energy consumption patterns across various network components. In addition, the present subject matter facilitates measuring and accounting for energy consumption across various stages of AI/ML pipeline, at granular levels including different network nodes, interfaces, protocols, and even lifecycle stages of applications like rApps and xApps. Such holistic approach enables a more accurate assessment of true energy cost of implementing AI/ML models in network operations.

Further, the energy analytics as per the present subject matter may expose detailed metrics on energy consumption during different operational states, including AI/ML model training, inference, and execution of network optimization strategies. The present subject matter enables collection and aggregation of energy consumption data from diverse sources, such as O-RUs, O-DUs, RICs, and core network elements, providing a comprehensive view of the network's energy profile. This granular visibility allows operators to optimize resource allocation, and implement targeted energy-saving measures, ultimately leading to more sustainable and cost-effective network operations.

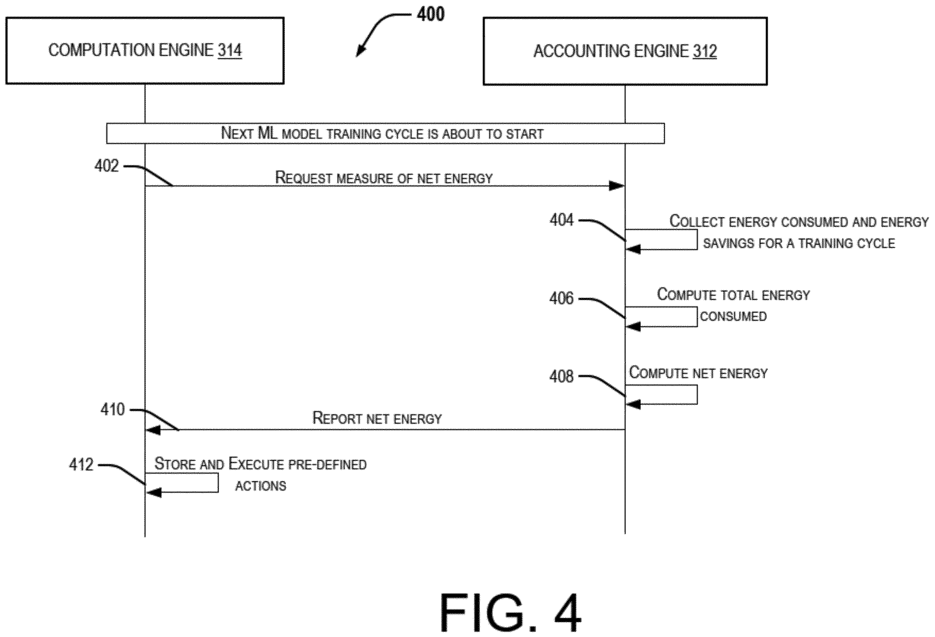

FIG. 4 illustrates a call flow diagram 400 for facilitating energy accounting of network nodes in a Radio Access Network (RAN), such as the RAN 204, in accordance with an example of the present subject matter. The various arrow indicators used in the call flow diagram 400 depict the transfer of data between components of the network apparatus, such as the network apparatus 100 and 300, and between the applications running in the network apparatus. The order in which the call flow diagram 400 is described is not intended to be construed as a limitation, and any number of the described steps may be combined in any order to implement the call flow diagram 400, or an alternative method. Further, certain steps have been omitted in the flow diagram for the sake of brevity and clarity.

In an implementation, the present call flow diagram 400 is described from the perspective of an SMO, such as the SMO 208. The SMO may include the computation engine 314 and the accounting engine 312. Although described from the perspective of the SMO, it would be evident to a person skilled in the art that the present call flow 400 may be implemented in other network nodes, such as the non-RT RIC 210, the near-RT RIC 212, the E2 node 216, the O-RU 222, and so on. The call flow diagram 400 describes energy accounting across the RAN for after obtaining inference from one AI/ML model and before initiating next training of the AI/ML model. It will be understood to a person skilled in the art that the energy accounting may be performed across different stages or cycles or use cases of the AI/ML model, in various combinations.

In the call flow 400, at step 402, the computation engine 314 may request a measure of net energy from the accounting engine 312. The request may include a "model id" for determining net energy corresponding to one or more AI/ML models associated with the model id. The "model id" mentioned here refers to an ID of the AI/ML model. However, the meaning of "model id" should not be construed as a limitation and may be understood in a generic manner. Accordingly, the "model id" may construed to include other variants, such as but not limited to, identifier of physical model artifact, identifier of a logical model relating to one or multiple physical models, identifier of an ML functionality relating to one or multiple logical models (tailored to a use case and specific network conditions/parameterization), identifier of an ML functionality group relating to one or multiple ML functionalities tailored to a use case for different network conditions/parametrization. In an example, the request may include additional parameters, such as source ID, target ID, protocol ID, interface ID, and so on for determining net energy corresponding to the one or more AI/ML models.

At step 404, the accounting engine 312 may perform a series of operations. For example, the accounting engine 312 may obtain data pertaining to energy consumed across the network during implementation and operation of the AI/ML pipeline at a network node. As described above, the AI/ML pipeline may include a plurality of stages, such as data collection stage, data pre-processing stage, data storage stage, model training stage, model inference stage, model feedback stage, action execution stage, and so on. In addition, the accounting engine 312 may determine energy savings data based on the inference derived from the trained AI/ML model.

At step 406, the accounting engine 312 may compute a total energy consumed during the implantation of the AI/ML model. The total energy consumed may be computed by aggregating the energy consumed at the data stage, the model stage, and the action execution stage, associated with the AI/ML model.

At step 408, the accounting engine 312 may compute the net energy. In an example, the net energy may be computed by subtracting the energy consumption data from the energy savings data. Positive value of the net energy may indicate that the AI/ML-derived actions result in energy savings. On the other hand, a negative value of the net energy may indicate that more energy is consumed during training of the AI/ML model. At step 410, the accounting engine 312 may report the net energy to the computation engine 314.

Further, at step 412, the computation engine 314 may execute one or more pre-defined actions based on the received information. For example, in case of negative value of net energy, the computation engine 314 may re-train the AI/ML model based on less data of higher quality or perform other actions to enhance the energy efficiency of the AI/ML model. Therefore, the present subject matter provides a comprehensive energy accounting process for AI/ML model training, enabling informed decision-making and potential optimization of energy consumption in the network nodes.

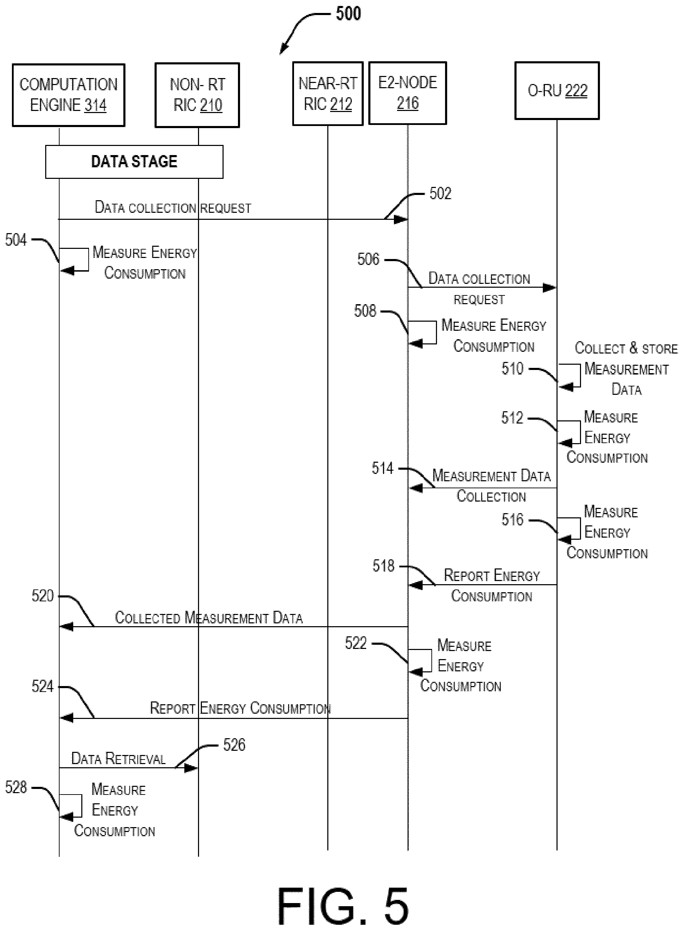

FIG. 5 illustrates a call flow diagram 500 depicting monitoring of energy consumption during a data stage of AI/ML pipeline, in accordance with an example of the present subject matter. The data stage may include multiple sub-stages, such as data collection, data pre-processing, data storage and transfer, and so on.

At step 502, the computation engine 314 may send a data collection request to the E2 node 216. At step 504, the computation engine 314 may measure energy consumed in preparing and sending the data collection request. Although depicted together, it would be evident to a person skilled in the art that the steps of preparing and sending the data collection may be performed separately. Accordingly, the computation engine 314 may measure energy consumed during preparing and sending separately. As each network entity is provided with an energy accounting functionality, each network entity may be configured to measure the energy consumption associated with any action. For example, energy values before and after the action may be compared to determine the energy consumption.

As depicted at step 506, the E2 node 216 may forward the data collection request to the O-RU 222. Accordingly, at step 508, the E2 node 216 may measure energy consumed in forwarding the data collection request to the O-RU 222.

At step 510, the O-RU 222 may collect and store measurement data. In an example, the O-RU 222 may collect the data from one or more UEs 224. Further, at step 512, the O-RU 222 may measure the energy consumed in collecting and storing the data.

At step 514, the O-RU 222 may share the measurement data collected from the UEs 224 to the E2 node 216. Accordingly, at step 516, the O-RU 222 may measure the energy consumed in sharing the collected measurement data.

Further, at step 518, the O-RU 222 may report the energy consumption measured so far for collecting and sharing the measurement data.

In an example, at step 520, the E2 node 216 may share the collected measurement data with the computation engine 314. For the present action, the E2 node 216 may measure the energy consumption, as depicted in step 522. Further, at step 524, the E2 node 216 may report the energy consumption till this stage to the computation engine 314. At step 526, the computation engine 314 may also request retrieval of data from non-RT RIC 210. In response to the request, the computation engine 314 may measure the energy consumed in requesting the data retrieval, at step 528.

In an example, during the data stage, the energy consumption associated with various parameters may also be considered. For example, the parameters may include an involved interface, a source entity, a target entity, a protocol ID, and so on. The present subject matter therefore takes into account the energy consumed at each and every stage of data collection. As a result, at the end of the call flow diagram 500, the energy consumed ($E_D$) for the data stage may be obtained.

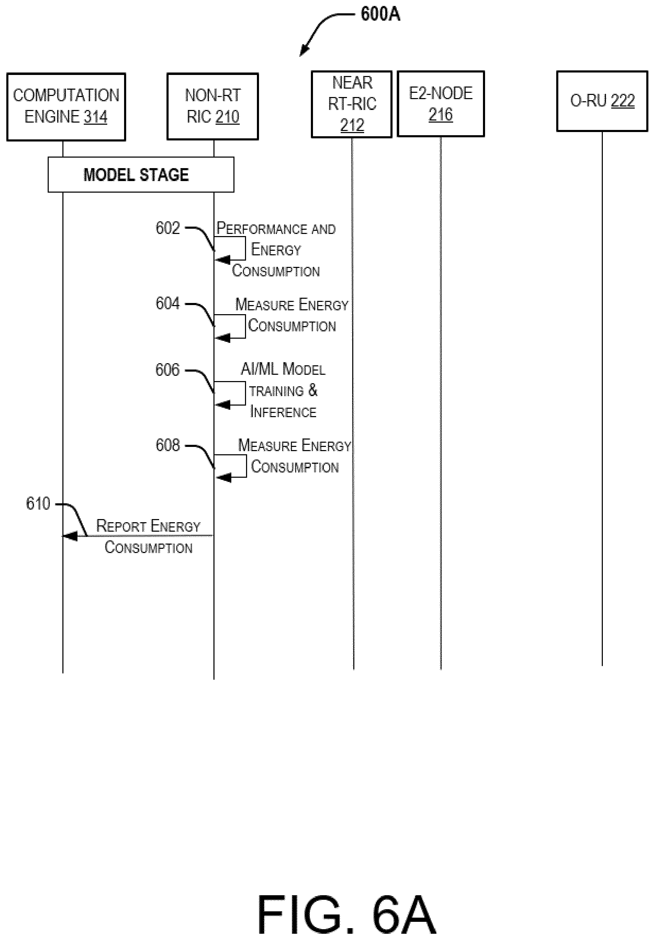

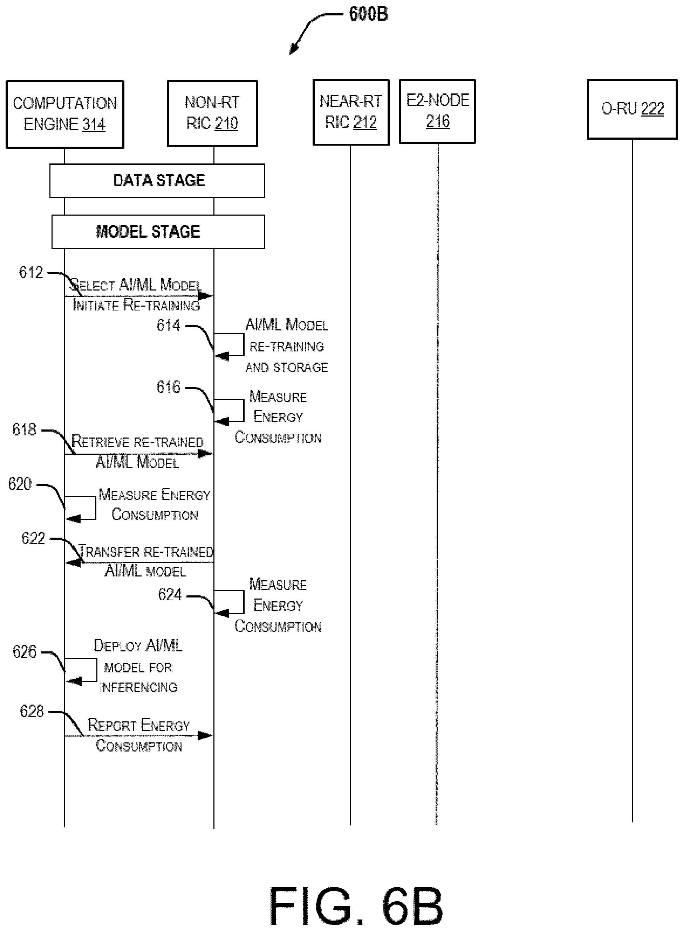

FIGS. 6A and 6B illustrate call flow diagrams 600A and 600B depicting monitoring of energy consumption during a model stage of AI/ML pipeline, in accordance with an example of the present subject matter. The model stage may include multiple sub-stages, such as model training, model inference, performance feedback, and so on.

Referring to FIG. 6A, once the data collection has been completed, the AI/ML model may be trained on the collected data. The energy consumed during the training of the AI/ML model is considered while computing the overall energy consumption of the network.

In an implementation, as per call flow diagram 600A, the training and inference of the AI/ML model may be performed by the non-RT RIC 210. At step 602, the non-RT RIC 210 may monitor performance and energy consumption of different O-RAN nodes, such as E2 node 216 and O-RU 222. Thereafter, at step 604, the non-RT RIC 210 may measure the energy consumed in monitoring the performance of E2 nodes 216 and O-RUs 222.

Further, at step 606, the non-RT RIC 210 may train the AI/ML model and obtain inferences from the AI/ML model. It may be understood that although the training and inference stages are depicted to be performed together, the same may be performed separately. At step 608, the non-RT RIC 210 may measure the energy consumption during the training and inference stages. Thereafter, as depicted at step 610, the non-RT RIC 210 may report the energy consumption during the model stage to the computation engine 314.

Although the call flow diagram 600A depicts that the training and inference of the AI/ML model may be performed by the non-RT RIC 210, it may be evident to a person skilled in the art that the training of the AI/ML model may be performed by the non-RT RIC 210 and the inference of the AI/ML model may be performed by the near-RT RIC 212.

Referring to FIG. 6B, the call flow diagram 600B depicts another implementation of monitoring the energy consumption at the model stage. In the present implementation, the AI/ML model may be retrained by the non-RT RIC 210 for being deployed at a network node. At step 612, the computation engine 314 may send a message to the non-RT RIC 210 to select the AI/ML model and initiate re-training of the selected AI/ML model. In an example, the AI/ML model may be re-trained when a significant amount of new, relevant data becomes available that could potentially improve the model's accuracy and effectiveness. The AI/ML model may also be re-trained when the current AI/ML model's performance begins to decline or as part of a scheduled maintenance cycle to ensure the model remains up-to-date and effective.

In response to the message, at step 614, the non-RT RIC 210 may retrain the AI/ML model and store the re-trained model. Thereafter, at step 616, the non-RT RIC 210 may measure the energy consumed during the retraining and storage of the AI/ML model.

Further, at step 618, the computation engine 314 may send a request to retrieve the retrained AI/ML model from the non-RT RIC 210. Accordingly, at step 620, the computation engine 314 may measure the energy consumed in sending the request for retrieving the retrained AI/ML model from the non-RT RIC 210. Further, at step 622, the non-RT RIC 210 may transfer the re-trained AI/ML model to the computation engine 314 in response to the request. At step 624, the non-RT RIC 210 may measure the energy consumed in transferring the AI/ML model. Although not depicted in FIG. 6B, the non-RT RIC 210 may also measure the energy consumed in receiving and processing the request from the computation engine 314 as indicated in step 618.

At step 626, the computation engine 314 may deploy the retrained AI/ML model at the network for deriving inferences. Thereafter, at step 628, the computation engine 314 may report the energy consumed during the model stage. The present subject matter therefore measures the energy consumed during various aspects related to model training and inference.

As described with reference to the data stage, during the model stage, the energy consumption associated with various parameters may also be considered. For example, the parameters may include an involved interface, a source entity, a target entity, a protocol ID, and so on. The present subject matter therefore takes into account the energy consumed at granular levels of the model stage. As a result, at the end of the call flow diagrams 600A and 600B, the energy consumed ($E_M$) for the model stage may be obtained.

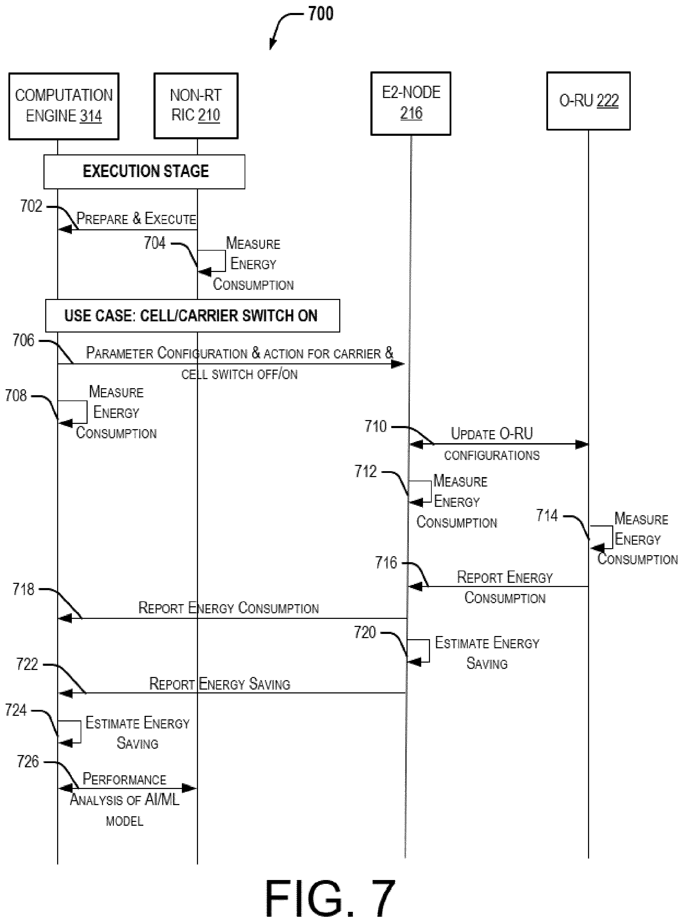

FIG. 7 illustrates a call flow diagram 700 depicting monitoring of energy consumption during execution stage of AI/ML pipeline for cell/carrier switch on/off use case, in accordance with an example of the present subject matter. At step 702, the non-RT RIC 210 may send a request to the collection engine 314 for preparing and executing carrier or cell switch off. The non-RT RIC 210 may, at step 704, measure the energy consumed in sending the request for preparing and executing the carrier or cell switch off. As explained above, the non-RT RIC 210 may compare the energy levels before and after sending the request to determine the energy consumption.

Further, the present call flow diagram 700 depicts a particular use case pertaining to cell/carrier switch. In one implementation, at step 706, the computation engine 314 may send a parameter configuration and action request to the E2 node 216. The request may include the parameter configuration at the E2 node 216 and a command to execute an action pertaining to carrier(s) and cell(s) switch off/on preparation. To this end, the E2 node 216 may execute the actions defined by the computation engine 314 and update the computation engine 314 on the same the E2 node 216. In an example, the computation engine 314 may send the request over O1 interface to the E2 node 216. Further, at step 708, the computation engine 314 may measure the energy consumed in sending the request to the E2 node 216.

In response to the request, at step 710, the E2 node 216 may communicate with the O-RU 222 to update O-RU configurations. In response to the update, the O-RU 222 may notify the E2 node 216 that the O-RU configurations have been updated. The communication between the E2 node 216 and the O-RU 222 may result in some amount of energy consumption. At steps 712 and 714, the energy consumed at the E2 node 216 and the O-RU 222, respectively, may be measured. At step 716, the O-RU 222 may report the energy consumed at the O-RU 222 to the E2 node 216. Further, at step 718, the E2 node 216 may combine the energy reported at step 716 with the energy consumed at the E2 node 216 and report the consolidated energy consumption to the computation engine 314. The E2 node 216 may report the consolidated energy consumption over the O1 interface to the communication engine 314. As may be understood, the steps 706 to 718 indicate measurement of energy consumed in performing an action based on one or more inferences of the AI/ML model.

In another implementation, the computation engine 314 may directly communicate with the O-RU 222. For example, the computation engine 314 may exchange E2 node parameter configurations and actions for carrier and cell switch off/on preparation with the E2 node 216. In response, the E2 node 216 may execute the actions defined by the computation engine 314 and update the computation engine 314 on the same. Further, the computation engine 314 may communicate with the O-RU 222 to configure O-RU parameters based on the actions executed by the E2 Node 216. The O-RU 222 may notify the computation directly about the configuration of O-RU parameters. Accordingly, the computation engine 314, the E2 Node 216, and the O-RU 222 may measure the energy consumption for the above-recited steps. Thereafter, the O-RU 222 and the E2 node 216 may report the energy consumption at respective locations to the computation engine 314 for determination of total energy consumed during the action execution stage. As a result, at the end of the action execution stage, the energy consumed ($E_A$) upon execution of an action based on the AI/ML model inference, may be obtained.

In an implementation, to compute the total energy consumed, the computation engine 314 may obtain a second value corresponding to change in energy consumption by a second network node ($E_{second\,Value}$) in communication with the first network node. The second value may be obtained pursuant to the implementation and operation of one of the AI and the ML pipeline at the first network node. For example, energy consumed by the second network mode prior ($E_{prior}$) to the decision of the AI/ML model at the first network node may be measured. Thereafter, the energy consumption at the second network node post ($E_{post}$) the decision of the AI/ML model at the first network node are measured. Thus, the change or increase energy consumption at the second network node may be determined as:

$$E_{second\,value} = E_{post} - E_{prior}$$

In another implementation, to compute the total energy consumed, the computation engine 314 may monitor and log the energy consumed for lifecycle management of applications ($E_{App}$) that may run on the RAN architecture to enhance network functionality and management, such as analysing the energy consumption patterns of different network elements. In the context of O-RAN architecture, such applications may be an rApp and an xApp that run on the non-RT RIC 210 and a near RT-RIC 212, respectively. In an example, the plurality of lifecycle stages of an application comprises an onboarding stage, a registration stage, an update stage, a migration stage, and a de-registration stage.

Accordingly, the total energy consumed at the network may be computed as the first value corresponding to the energy consumed in the network during implementation and operation of the AI/ML pipeline:

$$E_{first\,value} = E_D + E_M + E_A + E_{App} + E_{second\,value}$$

Referring again to the call flow diagram 700, at step 720, the E2 node 216 may estimate the energy saved due to execution of the actions suggested by the computation engine 314. For example, the E2 node 216 may estimate the energy saved by the updates in the O-RU configurations based on the optimizations achieved out of the AI/ML model.

At step 722, the E2 Node 216 may send a message reporting the energy saving to the computation engine 314 in the SMO 208. Further, at step 724, the computation engine 314 may estimate the energy savings due to the execution of the carrier and cell switch off/on action. In an example, estimate of the energy saving at the E2 node 216 and the SMO 208 may be performed as separate steps which may not be in tandem. As described above, to estimate the energy savings at any node, energy levels of the node before and after the execution of AI/ML driven action are determined. A difference in the energy levels provides the estimate of the energy savings at the node.

At step 726, the computation engine 314 may communicate with the non-RT RIC 210 to analyse the performance of the AI/ML model. As described above, the computation engine 314 may aggregate the energy consumed during the data stage, the model stage, and the action execution stage to determine the total energy consumed. In addition, the computation engine 314 may aggregate the energy consumed at another network node due to AI/ML-driven action on one network node. Further, the computation engine 314 may include the energy consumed during various lifecycle stages of an energy monitoring application, while computing the total energy consumed.

Thereafter, the computation engine 314 may subtract the total energy consumed from the total energy savings to determine a net energy. A positive value of net energy may indicate a profitable energy saving, suggesting that the implemented changes based on decision of the AI/ML model have effectively reduced energy consumption beyond the energy cost of the AI/ML pipeline itself. Conversely, a negative value of net energy value signify an energy loss, implying that the energy consumed by the AI/ML pipeline exceeds the savings achieved.

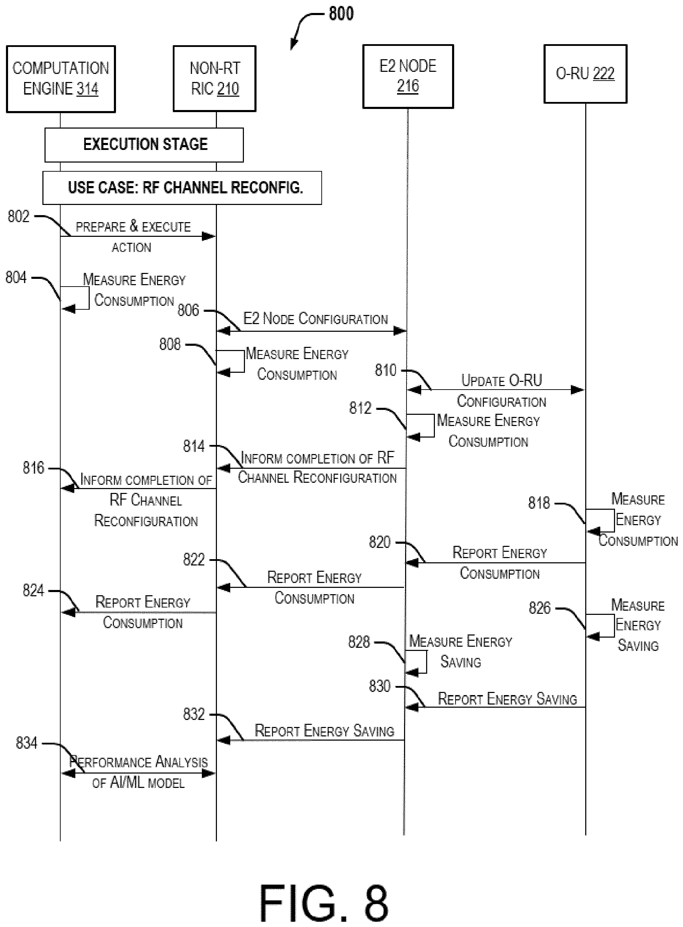

FIG. 8 illustrates a call flow diagram 800 depicting monitoring of energy consumption during execution stage of AI/ML driven action for RF Channel reconfiguration use case, in accordance with an example of the present subject matter. For the sake of brevity, the collection and computation of energy consumption at the data stage and the model stage are not explained for the present use case. It would be understood that the same may be performed in a manner as described with reference to FIG. 7.

In one implementation, at step 802, the computation engine 314 may send a prepare and execution request to the non-RT RIC 210. The action may correspond to RF configuration activity. In an example, the computation engine 314 may send the request over R1 interface to the non-RT RIC 210. Further, at step 804, the computation engine 314 may measure the energy consumed in sending the request to the non-RT RIC 210. At step 806, the non-RT RIC 210 may exchange messages with the E2 node 216 to communicate E2 node configuration for RF Channel reconfiguration. In an example, the non-RT RIC 210 may exchange messages with the E2 node 216 over the O1 interface. At step 808, the non-RT RIC 210 may measure the energy consumed for exchanging messages with the E2 node 216.

At step 810, the E2 node 216 may exchange messages with the O-RU 222 over fronthaul. Accordingly, the O-RU 222 may update necessary configurations and notify the E2 node 216 about the updates. At steps 812 and 818, the energy consumed at the E2 node 216 and the O-RU 222, respectively, may be measured.

At step 814, the E2 node 216 may send a message to non-RT RIC 210 informing about the completion of the RF channel reconfiguration. As may be evident, the E2 node 216 may send the message to the non-RT RIC 210 over O1 interface. Further, at step 816, the non-RT RIC 210 may send a message over R1 interface to the computation engine 314 to inform about the completion of the RF channel reconfiguration.

At step 820, the O-RU 222 may send a message to the E2 node 216 reporting the energy consumption during implementation of the action derived from the AI/ML model inference. At step 822, the E2 node 216 may send a message to the non-RT RIC 210 reporting about the energy consumed. In an example, the energy consumption reported by the E2 node 216 includes the energy consumption of the O-RU 222 as well as the E2 node 216. Based on the above, at step 824, the non-RT RIC 210 may send a message reporting total energy consumed during the action execution stage to the computation engine 314. The steps 802 to 824 indicate measurement of energy consumed in performing the RF channel reconfiguration based on one or more inferences of the AI/ML model.

Similar to FIG. 7, other implementations of the call flow diagram 800 may be possible. For example, the computation engine 314 may separately and directly communicate with the E2 Node 216 and O-RU 222. To this end, the E2 node 216 and the O-RU 222 may report the energy consumption separately and directly to the computation engine 314 for determination of total energy consumed during the action execution stage.

Referring again to the call flow diagram 800, at step 826, the O-RU 222 may estimate the energy saved due to execution of the actions suggested by the E2 node 216. For example, the O-RU 222 may estimate the energy saved by the updates in the O-RU configurations based on the optimizations achieved out of the AI/ML model. At step 830, the O-RU 222 may report the energy saved to the E2 node 216.

At step 828, the E2 node 216 may estimate the energy saved due to execution of the actions suggested by the computation engine 314. At step 832, the E2 Node 216 may send a message reporting the energy saving to the non-RT RIC 210 in the SMO 208. Accordingly, the computation engine 314 may estimate the energy savings due to the execution of the RF channel reconfiguration action.

At step 834, the computation engine 314 may communicate with the non-RT RIC 210 to analyse the performance of the AI/ML model. For example, the computation engine 314 may aggregate the energy consumed during the data stage, the model stage, and the action execution stage to determine the total energy consumed. The computation engine 314 may subtract the total energy consumed from the total energy savings to determine a net energy.

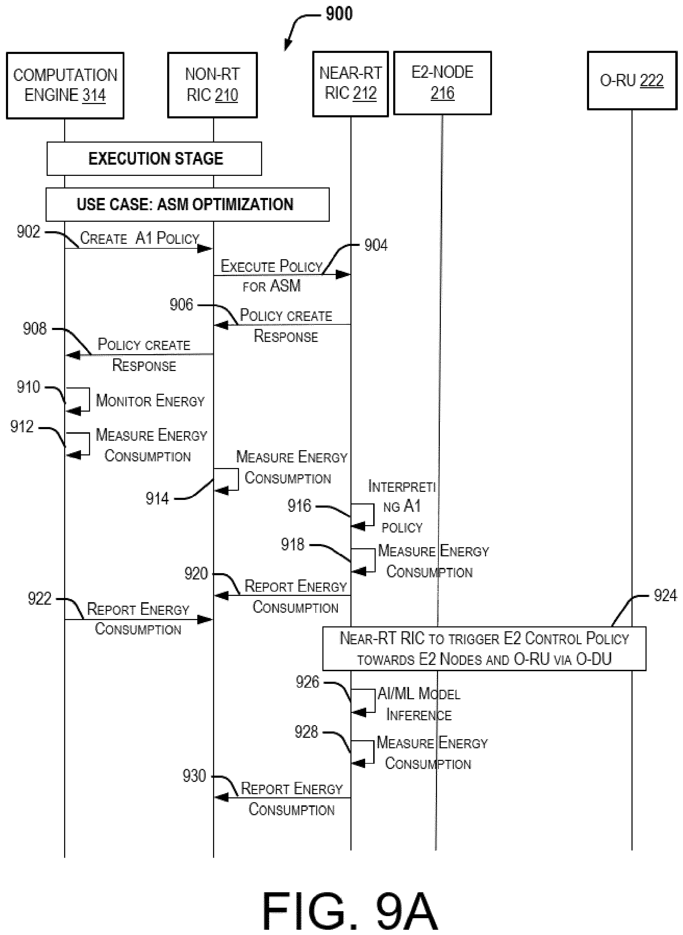

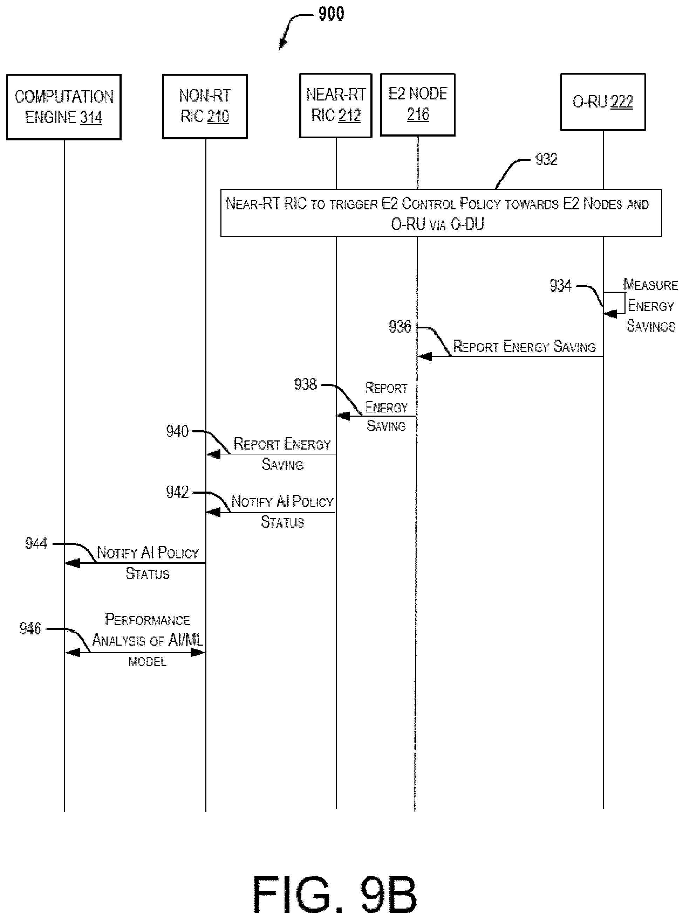

FIGS. 9A and 9B illustrates a call flow diagram 900 depicting monitoring of energy consumption during execution stage of AI/ML pipeline for Advanced Sleep Mode (ASM) optimization use case, in accordance with an example of the present subject matter. For the sake of brevity, the collection and computation of energy consumption at the data stage and the model stage are not explained for the present use case. It would be understood that the same may be performed in a manner as described with reference to FIG. 7.

At step 902, the computation engine 314 may send a message to the non-RT RIC 210 to create an A1 Policy. An A1 policy may refer to a set of rules, configurations, or instructions created and managed by higher-level network components, such as the non-RT RIC 210 to govern the behaviour and operation of lower-level network elements, such as O-RU 222. At step 904, the non-RT RIC 210 may communicate relevant instructions or control messages to other entities in the network, such as the near-RT RIC 212 to prepare and execute the A1 policy for ASM. In an example, the near-RT RIC 212 may implement the policy, which may include rules for energy-efficient network management.

Further, at step 906, after executing the A1 policy, the near-RT RIC 212 sends a policy create response to the non-RT RIC 210. The response message may confirm successful policy implementation. At step 908, the non-RT RIC 210 may forward the policy create response to the computation engine 314. The computation engine 314 may initiate monitoring energy saving objective of the A1 policy, as depicted at step 910. In addition, at step 912, the computation engine 314 may measure the energy consumption in monitoring the A1 policy. Likewise, at step 914, the non-RT RIC 210 may measure the energy consumed in creation of the policy and exchange of messages.

In an example, at step 916, the near-RT RIC 212 may interpret the A1 policy. Interpreting the A1 policy may indicate parsing and understanding the policy content, translating high-level directives into specific actions, and so on. At step 918, the near-RT RIC 212 may measure the energy consumed during the interpretation. At step 920, the near-RT RIC 212 may report the energy consumption back to the non-RT RIC 210. Further, the computation engine 314 may also report the energy consumption to the non-RT RIC 210, as depicted in step 922. Accordingly, the non-RT RIC 210 may compute the total energy consumed based on pre-defined parameters.

In an example implementation, at step 924, data collection may be performed by the near-RT RIC 212 to trigger an E2 Control Policy towards E2 Node 216 and O-RU 222 via O-DU. As a result, energy is consumed at near-RT RIC 212, E2 Node 216 and O-RU 222. For the sake of brevity separate steps for measuring the energy consumed at the near-RT RIC 212, the E2 Node 216, and the O-RU 222 are not depicted here. Once the energy is measured, the O-RU 222 and the E2 node 216 may report the energy consumed to E2 Node 216 and near-RT RIC 212, respectively.

At step 926, the near RT-RIC 212 may derive AI/ML inference to evaluate E2 control policy. The energy consumed for deriving the AI/ML inference may be measured at the near RT-RIC 212, as depicted in step 928. Further, at step 930, the near RT-RIC 212 may report the updated energy consumption to the non-RT RIC 210.

As depicted in FIG. 9B, at step 932, the near-RT RIC 212 may trigger the E2 Control Policy towards the E2 Node 216 and the O-RU 222 via O-DU. As a result, energy is consumed at the near-RT RIC 212, the E2 Node 216, and the O-RU 222. For the sake of brevity separate steps for measuring the energy consumed at the near-RT RIC 212, the E2 Node 216, and the O-RU 222 are not depicted here. As described earlier, each network entity, e.g., O-RU 222, E2 node 216 are capable of reporting logged energy measurements to related next node in the chain. For example, for O-RU 222, the E2 node 216 is the next node and for the E2 node 216, near-RT RIC 212 is the next node. Accordingly, once measurements are performed for the consumed energy, the O-RU 222, the E2 node 216, and the near-RT RIC 212 may report the energy consumed to the E2 Node 216, the near-RT RIC 212, and the non-RT RIC 210, respectively. Based on the energy consumption reports received at various instances, the non-RT RIC 210 may determine the total energy consumption during the sequential stages associated with the AI/ML pipeline.

At step 934, the O-RU 222 may estimate the energy saved due to execution of the actions suggested by the E2 node 216. For example, the O-RU 222 may estimate the energy saved at the O-RU 222 due to the policy implementation achieved out of the AI/ML model. At step 936, the O-RU 222 may send a message to the E2 node 216 through the fronthaul to report the energy saved.

Further, the E2 node 216 may estimate the energy saved due to implementation of the E2 policy. Accordingly, at step 938, the E2 Node 216 may send a message to the near-RT RIC 212 over the E2 interface for reporting the energy saved. Further, at step 940, the near-RT RIC 212 may send a message to the non-RT RIC 210 or SMO 208 over the A1 interface to report the energy saved. Accordingly, the SMO 208 may estimate the energy savings due to the execution of the policy.

At step 942, the near-RT RIC 212 may send a message to the non-RT RIC 210 over the A1 interface to notify a status of the policy. Thereafter, at step 944, the non-RT RIC 210 may notify a status of the policy to the computation engine 314 over the R1 interface. The computation engine 314 may aggregate the energy saved across the network due to the execution of the policy. This provides feedback on the overall effectiveness of the AI-driven energy-saving policy. At step 946, the computation engine 314 may communicate with the non-RT RIC 210 to compute the measure of the net energy thereby performing a performance analysis of the AI/ML model. Accordingly, the model's effectiveness may be evaluated in reducing energy consumption.

In an example implementation, based on the performance analysis, the computation engine 314 may take execute certain pre-defined actions in response to the computed measure of the net energy. For example, if the measure of the net energy is negative, the computation engine 314 may execute an action to update or delete the A1 policy. Based on such an action, the AI/ML model may be updated and again the net energy measurement is performed.

Accordingly, the present subject matter enables computation of overall energy consumption, and the overall energy saving is performed at the data stage, model stage, and the action execution stage. Thereafter, the measure of net energy may be computed. Although only three use cases have been described with respect to FIGS. 7 to 9B, it would be evident to a person skilled in the art that other use cases, such as O-cloud resource energy saving mode, may also be possible, without deviating from the scope of the present subject matter.

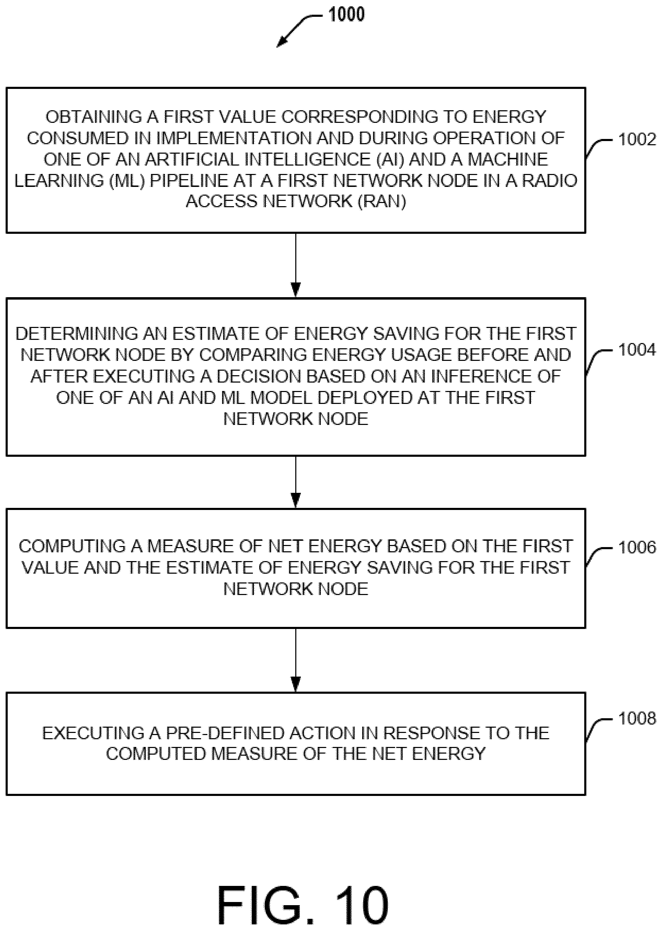

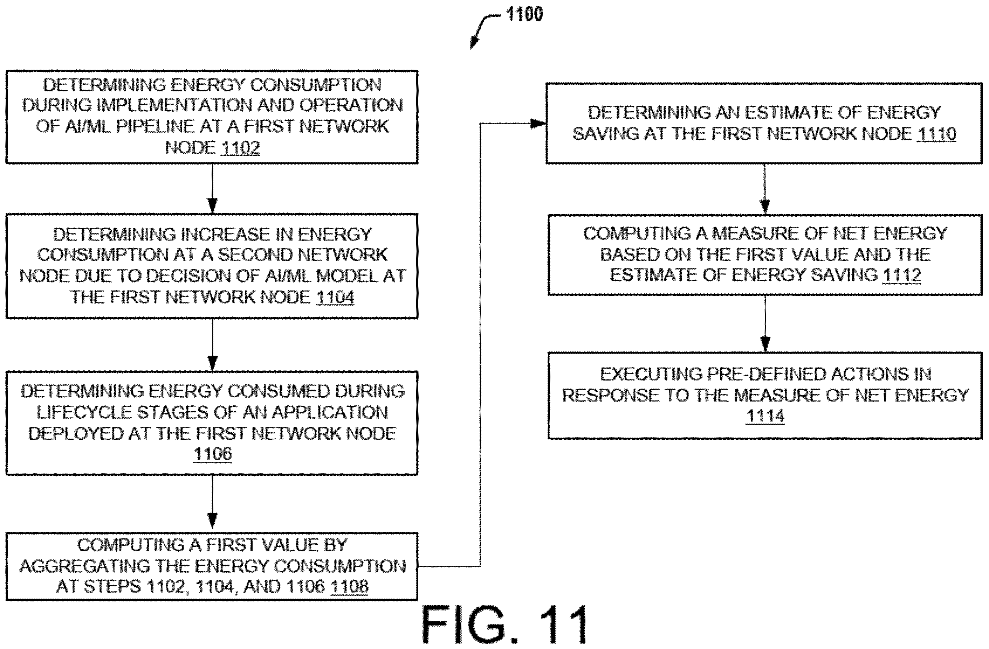

FIG. 10 and FIG. 11 is a flowchart depicting example methods 1000 and 1100 for accounting energy of network nodes in a Radio Access Network (RAN), in accordance with an example of the present subject matter. The order in which the above-mentioned methods are described is not intended to be construed as a limitation, and some of the described method blocks may be combined in a different order to implement the method, or an alternative method. The above-mentioned methods may be implemented in a network apparatus (e.g., RIC, E2 Node, or a base station device), suitable hardware, computer-readable instructions, or combination thereof. The steps of such methods may be performed by either a network apparatus under the instruction of machine executable instructions stored on a non-transitory computer readable medium or by dedicated hardware circuits, microcontrollers, or logic circuits. For example, the methods may be performed by the network apparatus 300. Herein, some examples are also intended to cover non-transitory computer readable medium, for example, digital data storage media, which are computer readable and encode computer-executable instructions, where said instructions perform some or all the steps of the above-mentioned methods.

At block 1002, first value corresponding to energy consumed in implementation and during operation of one of an artificial intelligence (AI) and a machine learning (ML) pipeline at a first network node in a Radio Access Network (RAN) may be obtained. In an example, the first value may be computed by the network apparatus itself or may be computed by another entity and provided to the network apparatus.

The term "AI/ML pipeline" may refer to various steps designed to build, train, and deploy AI or ML models in the context of a problem to be solved or a use case to be addressed. For example, the AI/ML pipeline may include various stages, such as a data collection stage, a data pre-processing stage, a model training stage, a model validation and testing stage, a model deployment stage, a model inference stage, a performance feedback stage, and an action implementation stage. Therefore, computation of the energy consumption includes energy consumed during the various stages associated with the AI/ML pipeline. In an implementation, in addition to the above, the computation of the first value may include any increase in energy consumption at a second network node due to implementation and operation of the AI/ML pipeline at the first network node. In another implementation, the computation of the first value also considers the energy consumed at various lifecycle stages of an application deployed in the first network node. For example, the application may be configured to monitor the energy consumption of one of the AI/ML pipelines. In the context of open RAN architecture, such applications may be an rApp and an xApp that run on a Non-Real-Time (Non-RT) RIC and a near Real-Time RIC, respectively.

Further, at block 1004, an estimate of energy saving for the first network node may be determined. In an example, the estimate of energy saving for the first network node may be determined by comparing energy usage before and after executing a decision based on an inference of one of an AI and ML model deployed at the first network node. For example, to estimate energy savings for the first network node, a comparative analysis of energy consumption patterns may be conducted in two phases: before and after the implementation of the AI or ML model's decision.

In the first phase, the energy usage of the first network node may be measured under normal operating conditions to establish a baseline consumption profile. The AI or ML model may then provide an inference that leads to a specific decision aimed at optimizing energy use, such as adjusting network parameters or reallocating resources. After implementing this decision, the second phase involves measuring and recording the energy consumption at the first network node again. By comparing the energy data from the baseline phase with the post-implementation phase, the impact of the AI/ML decision on energy consumption may be quantified. The difference in energy consumption may represent the estimated energy savings achieved at the first network node.

At block 1006, a measure of net energy may be computed based on the first value and the estimate of energy saving for the first network node. For example, the net energy may be computed by subtracting the first energy value from the estimated energy saving. A positive value of net energy may indicate that the implemented changes based on a decision of the AI/ML model have effectively reduced energy consumption more than the energy cost associated with the AI/ML pipeline. On the other hand, a negative value of net energy may indicate that the energy consumed by the AI/ML pipeline surpasses the savings it has generated.

At block 1008, a pre-defined action may be executed in response to the computed measure of the net energy. In an example, in case of positive value of net energy, the pre-defined actions may include scaling the successful optimizations, applying similar changes across other parts of the network, or investing in further AI/ML enhancements. On the other hand, in case of negative value of net energy, the pre-defined actions may include enhancing the AI/ML model via re-training devising e.g., early stopping of training, model platform power capping, or training model based on less data of higher quality.

Referring to FIG. 11, at block 1102, energy consumption during implementation and operation of AI/ML pipeline at the first network node may be determined. In an implementation, the computation engine 314 may determine the energy consumption during implementation and operation of the AI/ML pipeline. In an example, the AI and the ML pipeline may include a plurality of sequenced stages for implementing the AI or the ML model at the first network node. The plurality of sequenced stages may broadly include a data stage, a model stage, and an actor or execution stage. The data stage may include energy consumed during various data related operations, such as data transfer. The model stage may include energy consumed during various model related operations, such as model training. Further, the actor or execution stage may include energy consumed during various actions, such as cell de-activation, taken based on one or more inferences the AI/ML model.

In view of the plurality of sequenced stages, the energy consumption during the implementation and operation of AI/ML pipeline may be associated with pre-defined parameters. Examples of the pre-defined parameters include, but are not limited to, a ML model ID, a source entity ID, a target entity ID, a model-related operation ID, a data-related operation ID, an actor-related ID, an actor's decision related ID, a timestamp, an interface ID, and a protocol ID.

At block 1104, an increase in energy consumption at a second network node ($E_{second\,value}$) may be determined. In an example, the increase in energy consumption at the second network node may be caused due to decision taken based on inference of the AI/ML model at the first network node. In an example, the computation engine 314 may determine the increase in energy consumption at the second network node.

At block 1106, energy consumed during lifecycle stages of an application ($E_{App}$) deployed at the first network node may be determined. The application may be configured to monitor the energy consumption of one of the AI/ML pipelines. In an example, the various lifecycle stages of the application may include, application onboarding stage, application registration stage, application execution, application update stage, application migration stage, and application de-registration stage. Therefore, the determination of energy consumption during lifecycle stages of the application may be associated with another pre-defined parameter, such as an application ID. In an implementation, the computation engine 314 may determine the energy consumed during lifecycle stages of the application.

At block 1108, a first value corresponding to total energy consumption is computed by aggregating the energy consumption determined at blocks 1102, 1104, and 1106. Thus, the first value may indicate the total energy consumed across the network as a result of implementation and operation of the AI/ML pipeline at the first network node. In an implementation, the accounting engine 312 may compute the first value.

To do so, the accounting engine 312 may calculate the energy consumed at each of the plurality of sequential stages, such as the data stage, the model stage, and the actor stage, as indicated in the below equations:

$$E_D = \sum_{\forall applicable\ i,j,k,l} E_{Di,j,k,l}$$

$$E_M = \sum_{\forall applicable\ i,j,k,l} E_{Mi,j,k,l}$$

$$E_A = \sum_{\forall applicable\ i,j,k,l} E_{Ai,j,k,l}$$

where Mi denotes the model-related operation (e.g., model training), Di denotes the data-related operation (e.g., data transfer), Ai denotes the action taken by the actor (e.g., cell de-activation), j denotes the involved interface (i.e., O1) or takes the value of zero in case of local operation (e.g., model training), as applicable to the respective domains (i.e., model, data, actor), k denotes the source entity (e.g., O-RU, O-DU, Near-RT RIC, rApp, xApp, Non-RT RIC, SMO) as applicable to the respective domains (i.e., model, data, actor), l denotes the target entity (e.g., O-RU, O-DU, Near-RT RIC, rApp, xApp, Non-RT RIC, SMO) as applicable to the respective domains (i.e., model, data, actor).

Thus, the first value corresponding to the energy consumed in the network during implementation and operation of the AI/ML pipeline may be computed as:

$$E_{first\,value} = E_D + E_M + E_A + E_{App} + E_{second\,value}$$

At block 1110, an estimate of energy saving at the first network node may be determined. In an example, estimate of energy saving may be determined by comparing energy usage at the first network node before deployment of the AI/ML model at the first network node and after executing a decision based on an inference of the AI/ML model at the first network node. In an implementation, the accounting engine 312 may determine the estimate of energy saving.

At block 1112, a measure of net energy may be computed based on the first value and the estimate of energy saving. In an example, the measure of net energy is computed by subtracting the first value from the estimated energy saving. A positive value of the net energy may indicate a profit in the net energy whereas a negative value of the net energy may indicate a loss in the net energy. In an implementation, the computation engine 314 may compute the measure of net energy.

At block 1114, in response to the measure of net energy, pre-defined actions may be executed. In an implementation, the computation engine 314 may execute the pre-defined actions. For example, in case of the negative value of the net energy, the computation engine 314 may initiate a corrective action associated with the AI or ML model. For example, the computation engine 314 may execute an action to retrain the AI/ML model, train the AI/ML model based on less data of higher quality, decommission the AI/ML model, and so on.

Accordingly, the present subject matter provides techniques for computing energy consumption associated with different stages of AI/ML pipeline. As a result, the present subject matter provides a holistic understanding of the total energy footprint.

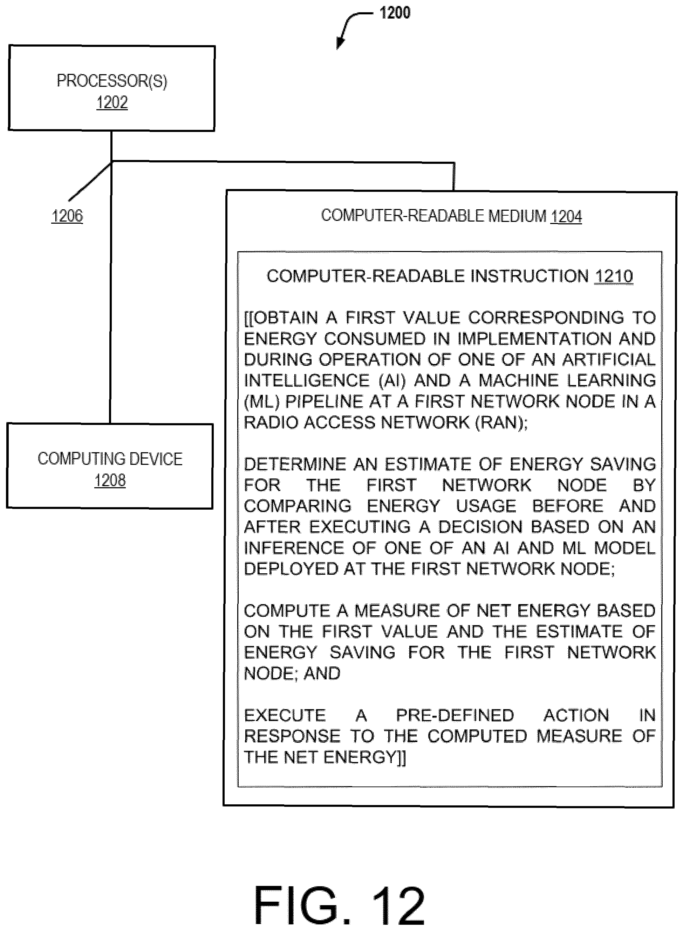

FIG. 12 illustrates an example system environment 1200 for accounting energy of network nodes in a Radio Access Network (RAN), in accordance with an example of the present subject matter. The system environment 1200 may comprise at least a portion of a public networking environment or a private networking environment, or a combination thereof. In one example, the system environment 1200 includes a processing resource, such as the processor(s) 1202 communicatively coupled to a computer readable medium 1204 through a communication link 1206. In an example, the processor 1202 may have one or more processing resources for fetching and executing computer-readable instructions from the non-transitory computer readable medium 1204.

In an example, the system environment 1200 may include a computing device 1208, such as a network apparatus. The processor(s) 1202 and the non-transitory computer readable medium 1204 may also be communicatively coupled to the computing device 1208 over the network. In an example, the processor(s) 1202 may be implemented within the computing device 1208. The processor 1202 and the non-transitory computer readable medium 1204 may be implemented, for example, in the computing device 1208.

The non-transitory computer readable medium 1204 may be, for example, an internal memory device or an external memory. In an example, the communication link 1206 may be a network communication link, or other communication links, such as a PCI (Peripheral component interconnect) Express, USB-C (Universal Serial Bus Type-C) interfaces, I2C (Inter-Integrated Circuit) interfaces, etc. In an example, the non-transitory computer readable medium 1204 comprises a set of computer readable instructions 1210 which may be accessed by the processor 1202 through the communication link 1206 and subsequently executed for facilitating accounting energy of network nodes in the RAN.

Referring to Fig. 12, in an example, the non-transitory computer readable medium 1204 comprises computer readable instructions 1210 that cause the processor 1202 to obtain a first value corresponding to energy consumed in implementation and during operation of one of an artificial intelligence (AI) and a machine learning (ML) pipeline at a first network node in the RAN. As used herein, the term "AI/ML pipeline" refers to steps designed to build, train, and deploy AI or ML models. For example, the AI/ML pipeline may include various stages, such as a data collection stage, a data preprocessing stage, a model training stage, a model testing & validation stage, a model deployment stage a model inference stage, a performance feedback stage, and an action execution stage. The AI/ML pipeline facilitates the automation of workflows to streamline the development of AI/ML models and may include tools and technologies that support various stages of model development and deployment.

Further, examples of the first network node may include but are not limited to, a Radio Unit (RU), a Distributed Unit (DU), a Centralized Unit (CU), a 6G Node, a RAN Intelligent Controller (RIC), and so on. In addition, examples of the RAN may include, but are not limited to, 5G RAN, 6G RAN, and open RAN.

Thus, energy consumed during various operations associated with the AI/ML pipeline is obtained and stored as the first value. The first value may include aggregation of the energy consumption values associated with each stage of the AI/ML pipeline. In an example, the first value may be associated with pre-defined parameters, such as but not limited to, a ML model ID, a source entity ID, a target entity ID, a model-related operation ID, a data-related operation ID, an actor-related ID, an actor's decision related ID, an application ID, a timestamp, an interface ID, a protocol ID.

In addition, computation of the first value also includes obtaining a second value corresponding to change in energy consumption by a second network node in communication with the first network node. The second value may be obtained pursuant to the implementation and operation of one of the AI and the ML pipeline at the first network node.

For example, implementation and operation of the AI/ML pipeline at the first network node may result in an increase in energy consumption at the second network node that may be associated with the first network node. In an example scenario, the AI/ML model at the first network node may determine that switching off certain cells may be beneficial for network optimization purposes. When these cells are switched off, the mobile devices previously served by the first network node may need to connect to alternative nodes, such as the second network node. As a result, the second network node may experience a sudden influx of traffic from the devices that were previously served by the first network node. Such a sudden influx of traffic is considered while computing the first input value.

Further, different applications run on the RAN architecture to enhance network functionality and management, such as analysing the energy consumption patterns of different network elements. As per the present subject matter, the computation of the first value corresponding to energy consumption also takes into account the energy consumed at each of a plurality of lifecycle stages of an application configured to monitor the energy consumption of one of the AI/ML pipelines, deployed in the first network node. In the context of open RAN architecture, such applications may be an rApp and an xApp that run on a Non-Real-Time (Non-RT) RIC and a near Real-Time RIC, respectively.

Once the energy consumed is computed and the first value is obtained, the execution of instructions 1210 may cause determination of an estimate of energy saving for the first network node. In an example, processor 1202 may determine the estimate of energy saving for the first network node by comparing energy usage before and after executing a decision based on an inference of one of an AI and ML model deployed at the first network node. For example, the processor 1202 may compare energy consumption at the first network node before and after implementing a decision informed by an AI or ML model. Initially, energy usage of the first network node may be measured under normal operating conditions. Thereafter, the processor 1202 may apply the AI/ML-driven decision, such as optimizing resource allocation or adjusting operating parameters, at the first network node. After the implementation, the processor 1202 may record the energy consumption again at the first network node. The difference between the pre-and post-implementation energy usage may indicate the energy savings at the first network node.

In addition, execution of instructions 1210 may cause computation of a measure of net energy based on the first value and the estimate of energy saving for the first network node. For example, the processor 1202 may compute a measure of net energy by subtracting the first value from the estimated energy saving. Such calculation may provide a quantitative assessment of the overall energy impact of the AI/ML model's decision. A positive value of net energy may indicate a profitable energy saving, suggesting that the implemented changes have effectively reduced energy consumption beyond the energy cost of the AI/ML pipeline itself. Conversely, a negative value of net energy may signify an energy loss, implying that the energy consumed by the AI/ML pipeline exceeds the savings achieved.

The instructions 1210 may then cause the processor 1202 to execute a pre-defined action in response to the computed measure of the net energy. These actions may include further optimizations if the net energy is positive, or reverting changes and reassessing strategies if the net energy is negative. For example, based on the measure of the net energy, the instructions 1210 may cause the processor 1202 to determine occurrence of an event. The event may be indicative of a situation where the energy consumption is more than the energy savings, i.e., negative net energy value. In case of negative net energy, the processor 1202 may initiate a corrective action associated with the AI or ML model when the event meets pre-defined criteria. In example of the corrective measure may include decommissioning the AI or the AI or ML model from the first network node when the event meets pre-defined criteria, such as consecutive negative energy for a pre-defined time period.

Although examples for the present disclosure have been described in language specific to structural features and/or methods, it is to be understood that the appended claims are not necessarily limited to the specific features or methods described. Rather, the specific features and methods are disclosed and explained as examples of the present disclosure.

**Claims**

1. A method comprising:

   obtaining (108) a first value corresponding to energy consumed in implementation and during operation of one of an Artificial Intelligence and a Machine Learning (ML) pipeline at a first network node of a Radio Access Network (RAN);
   determining (110) an estimate of energy saving for the first network node by comparing energy usage before and after executing a decision based on an inference of one of an AI and ML model deployed at the first network node;
   computing (112) a measure of net energy based on the first value and the estimate of energy saving for the first network node; and
   executing (114) a pre-defined action in response to the computed measure of the net energy.

2. The method as claimed in claim 1, wherein obtaining the first value comprises:
   obtaining a second value corresponding to change in energy consumption by a second network node in communication with the first network node, wherein the second value is obtained pursuant to the implementation and operation of one of the AI and the ML pipeline at the first network node.

3. The method as claimed in claim 1 or 2, wherein the first value is associated with pre-defined parameters comprising a ML model ID, a source entity ID, a target entity ID, a model-related operation ID, a data-related operation ID, an actor-related ID, an actor's decision related ID, application ID, a timestamp, an interface ID, and a protocol ID.

4. The method as claimed in claim 1, 2 or 3, wherein one of the AI and the ML pipeline comprises a plurality of sequenced stages for implementing the AI or the ML model at the first network node.

5. The method as claimed in claim 4, wherein obtaining the first value comprises:

   determining energy consumed at each of the plurality of sequenced stages of one of the AI and the ML pipeline at the first network node;
   determining energy consumed at each of a plurality of lifecycle stages of an application configured to monitor energy consumption of one of the AI or the ML pipeline, deployed in the first network node; and
   aggregating the energy consumed at each of the plurality of sequenced stages of one of the AI or the ML chain and the energy consumed at each lifecycle stage of the application to obtain the first value.

6. The method as claimed in claim 5, wherein the plurality of lifecycle stages of the application comprises an onboarding stage, a registration stage, an update stage, a migration stage, and a de-registration stage.

7. The method as claimed in claim 4, 5 or 6, wherein the plurality of sequenced stages comprises a data stage, a model stage, and an action execution stage.

8. The method as claimed in any of claims 1 to 7, wherein performing the pre-defined action comprises:

   based on the measure of the net energy, determining occurrence of an event, wherein the event is indicative of a situation where energy consumption is more than the energy saving; and
   initiating a corrective action associated with the ML model when the event meets pre-defined criteria.

9. A network apparatus (100, 300, 1200) comprising:

   at least one processor (102, 302, 1202);
   a machine-readable storage medium (104, 306, 1204) comprising instructions (106) executable by the processor, to cause the network apparatus to:

      obtain (108) a first value corresponding to energy consumed in implementation and during operation of one of an Artificial Intelligence (AI) and a Machine Learning (ML) pipeline at a first network node of a Radio Access Network (RAN);
      determine (110) an estimate of energy saving for the first network node by comparing energy usage before and after executing a decision based on an inference of one of an AI and ML model deployed at the first network node;
      compute (112) a measure of net energy based on the first value and the estimate of energy saving for the first network node; and
      execute (114) a pre-defined action in response to the computed measure of the net energy.

10. The apparatus (100, 300, 1200) as claimed in claim 9, wherein to obtain the first value, instructions executable by the processor, are to further:
    obtain a second value corresponding to change in energy consumption by a second network node in communication with the first network node, wherein the second value is obtained pursuant to the implementation and operation of one of the AI and the ML pipeline at the first network node.

11. The apparatus as claimed in claim 9 or 10, wherein the first value is associated with pre-defined parameters comprising a ML model ID, a source entity ID, a target entity ID, a model-related operation ID, a data-related operation ID, an actor-related ID, an actor's decision related ID, an application ID, a timestamp, an interface ID, and a protocol ID.

12. The apparatus (100, 300, 1200) as claimed in claim 9, 10 or 11, wherein one of the AI and the ML pipeline comprises a plurality of sequenced stages for implementing the AI or the ML model at the first network node.

13. The apparatus (100, 300, 1200) as claimed in claim 12, wherein to obtain the first value, instructions executable by the processor, are to further:

   determine energy consumed at each of the plurality of sequenced stages of one of the AI and the ML pipeline at the first network node;
   determine energy consumed at each of a plurality of lifecycle stages of an application configured to monitor energy consumption of one of the AI and the ML pipeline, deployed in the first network node; and
   aggregate the energy consumed at each of the plurality of sequenced stages of one of the AI and ML pipeline and the energy consumed at each lifecycle stage of the application.

14. The apparatus (100, 300, 1200) as claimed in claim 12 or 13, wherein the plurality of sequenced stages comprises a data collection stage, a model training stage, and an inference stage.

15. The apparatus (100, 300, 1200) as claimed in claim 12, 13 or 14, wherein the RAN is an open RAN (O-RAN) and the model training stage and an inference stage are performed by one of a non-real time (NRT) RIC and a near-real time (nRT) RIC of the O-RAN.

16. The apparatus (100, 300, 1200) as claimed in claim 12, 13, 14 or 15, wherein the RAN is an open RAN (O-RAN) and the model training stage is performed by a non-real time (NRT) RIC of the O-RAN and an inference stage is performed by a near-RT (nRT) RIC of the O-RAN.

17. The apparatus (100, 300, 1200) as claimed in claim any of claims 9 to 16, wherein to perform the pre-defined action, instructions executable by the processor, are to further:

   based on the measure of the net energy, determine occurrence of an event, wherein the event is indicative of a situation where energy consumption is more than the energy saving; and
   initiate a corrective action associated with the AI or the ML model when the event meets pre-defined criteria.

NETWORK APPARATUS 100

PROCESSOR(S) 102

MACHINE-READABLE STORAGE MEDIUM 104

INSTRUCTION(S) 106

OBTAIN A FIRST VALUE CORRESPONDING TO ENERGY CONSUMED IN IMPLEMENTATION AND DURING OPERATION OF ONE OF AN ARTIFICIAL INTELLIGENCE (AI) AND A MACHINE LEARNING (ML) MODEL PIPELINE AT A FIRST NETWORK NODE OF A RADIO ACCESS NETWORK (RAN) 108

DETERMINE AN ESTIMATE OF ENERGY SAVING FOR THE FIRST NETWORK NODE BY COMPARING ENERGY USAGE BEFORE AND AFTER EXECUTING A DECISION BASED ON AN INFERENCE OF THE ML MODEL DEPLOYED AT THE FIRST NETWORK NODE 110

COMPUTE A MEASURE OF NET ENERGY BASED ON THE FIRST VALUE AND THE ESTIMATE OF ENERGY SAVING FOR THE FIRST NETWORK NODE 112

EXECUTE A PRE-DEFINED ACTION IN RESPONSE TO THE COMPUTED MEASURE OF ENERGY SAVINGS 114

# FIG. 1

FIG. 2

EP 4 712 541 A1

NETWORK APPARATUS 300

PROCESSOR 302

INTERFACE(S) 304

MEMORY(S) 306

ENGINE(S) 308

ACCOUNTING ENGINE 312

COMPUTATION ENGINE 314

OTHER ENGINE(S) 316

DATA 310

CONSUMPTION DATA 318

PARAMETER DATA 320

APPLICATION DATA 322

SAVINGS DATA 324

NET ENERGY 326

OTHER DATA 328

FIG. 3

```
┌─────────────────────────┐                    ┌─────────────────────────┐
│ COMPUTATION ENGINE 314  │        400         │ ACCOUNTING ENGINE 312   │
└─────────────────────────┘                    └─────────────────────────┘
```

NEXT ML MODEL TRAINING CYCLE IS ABOUT TO START

402 — REQUEST MEASURE OF NET ENERGY

404 — COLLECT ENERGY CONSUMED AND ENERGY SAVINGS FOR A TRAINING CYCLE

406 — COMPUTE TOTAL ENERGY CONSUMED

408 — COMPUTE NET ENERGY

410 — REPORT NET ENERGY

412 — STORE AND EXECUTE PRE-DEFINED ACTIONS

# FIG. 4

500

COMPUTATION ENGINE 314 | NON- RT RIC 210 | NEAR-RT RIC 212 | E2-NODE 216 | O-RU 222

DATA STAGE

502

DATA COLLECTION REQUEST

504 — MEASURE ENERGY CONSUMPTION

506 — DATA COLLECTION REQUEST

508 — MEASURE ENERGY CONSUMPTION

COLLECT & STORE
510 — MEASUREMENT DATA

512 — MEASURE ENERGY CONSUMPTION

514 — MEASUREMENT DATA COLLECTION

516 — MEASURE ENERGY CONSUMPTION

518 — REPORT ENERGY CONSUMPTION

520 — COLLECTED MEASUREMENT DATA

522 — MEASURE ENERGY CONSUMPTION

524 — REPORT ENERGY CONSUMPTION

DATA RETRIEVAL — 526

528 — MEASURE ENERGY CONSUMPTION

# FIG. 5

FIG. 6A

600B

FIG. 6B

700

| COMPUTATION ENGINE 314 | NON-RT RIC 210 | | E2-NODE 216 | | O-RU 222 |

**EXECUTION STAGE**

702 — PREPARE & EXECUTE

704 — MEASURE ENERGY CONSUMPTION

**USE CASE: CELL/CARRIER SWITCH ON**

706 — PARAMETER CONFIGURATION & ACTION FOR CARRIER & CELL SWITCH OFF/ON

708 — MEASURE ENERGY CONSUMPTION

710 — UPDATE O-RU CONFIGURATIONS

712 — MEASURE ENERGY CONSUMPTION

714 — MEASURE ENERGY CONSUMPTION

716 — REPORT ENERGY CONSUMPTION

718 — REPORT ENERGY CONSUMPTION

720 — ESTIMATE ENERGY SAVING

722 — REPORT ENERGY SAVING

724 — ESTIMATE ENERGY SAVING

726 — PERFORMANCE ANALYSIS OF AI/ML MODEL

# FIG. 7

FIG. 8

FIG. 9A

900

| COMPUTATION ENGINE 314 | NON-RT RIC 210 | NEAR-RT RIC 212 | E2 NODE 216 | O-RU 222 |

932

NEAR-RT RIC TO TRIGGER E2 CONTROL POLICY TOWARDS E2 NODES AND O-RU VIA O-DU

934 — MEASURE ENERGY SAVINGS

936 — REPORT ENERGY SAVING

938 — REPORT ENERGY SAVING

940 — REPORT ENERGY SAVING

942 — NOTIFY AI POLICY STATUS

944 — NOTIFY AI POLICY STATUS

946 — PERFORMANCE ANALYSIS OF AI/ML MODEL

FIG. 9B

1000

OBTAINING A FIRST VALUE CORRESPONDING TO ENERGY CONSUMED IN IMPLEMENTATION AND DURING OPERATION OF ONE OF AN ARTIFICIAL INTELLIGENCE (AI) AND A MACHINE LEARNING (ML) PIPELINE AT A FIRST NETWORK NODE IN A RADIO ACCESS NETWORK (RAN) — 1002

DETERMINING AN ESTIMATE OF ENERGY SAVING FOR THE FIRST NETWORK NODE BY COMPARING ENERGY USAGE BEFORE AND AFTER EXECUTING A DECISION BASED ON AN INFERENCE OF ONE OF AN AI AND ML MODEL DEPLOYED AT THE FIRST NETWORK NODE — 1004

COMPUTING A MEASURE OF NET ENERGY BASED ON THE FIRST VALUE AND THE ESTIMATE OF ENERGY SAVING FOR THE FIRST NETWORK NODE — 1006

EXECUTING A PRE-DEFINED ACTION IN RESPONSE TO THE COMPUTED MEASURE OF THE NET ENERGY — 1008

# FIG. 10

FIG. 11

1200

PROCESSOR(S)
1202

1206

COMPUTING DEVICE
1208

COMPUTER-READABLE MEDIUM 1204

COMPUTER-READABLE INSTRUCTION 1210

[[OBTAIN A FIRST VALUE CORRESPONDING TO ENERGY CONSUMED IN IMPLEMENTATION AND DURING OPERATION OF ONE OF AN ARTIFICIAL INTELLIGENCE (AI) AND A MACHINE LEARNING (ML) PIPELINE AT A FIRST NETWORK NODE IN A RADIO ACCESS NETWORK (RAN);

DETERMINE AN ESTIMATE OF ENERGY SAVING FOR THE FIRST NETWORK NODE BY COMPARING ENERGY USAGE BEFORE AND AFTER EXECUTING A DECISION BASED ON AN INFERENCE OF ONE OF AN AI AND ML MODEL DEPLOYED AT THE FIRST NETWORK NODE;

COMPUTE A MEASURE OF NET ENERGY BASED ON THE FIRST VALUE AND THE ESTIMATE OF ENERGY SAVING FOR THE FIRST NETWORK NODE; AND

EXECUTE A PRE-DEFINED ACTION IN RESPONSE TO THE COMPUTED MEASURE OF THE NET ENERGY]]

# FIG. 12

## EUROPEAN SEARCH REPORT

**Application Number**

EP 25 20 0942

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 418 617 A1 (NOKIA SOLUTIONS & NETWORKS OY [FI]) 21 August 2024 (2024-08-21) * paragraphs [0021] - [0029], [0042], [0048], [0056] - [0059], [0072], [0081], [0085], [0086], [0095], [0096], [0098], [0099]; figure 4 * ----- | 1-17 | INV. H04W24/02 ADD. H04W52/02 |
| A | WO 2024/158481 A1 (RAKUTEN MOBILE INC [JP]; RAKUTEN MOBILE USA LLC [US]) 2 August 2024 (2024-08-02) * paragraphs [0071] - [0111]; figure 4 * ----- | 1-17 | |
| A | MAVROMATIS IOANNIS ET AL: "FROST: Towards Energy-efficient AI-on-5G Platforms - A GPU Power Capping Evaluation", 2023 IEEE CONFERENCE ON STANDARDS FOR COMMUNICATIONS AND NETWORKING (CSCN), IEEE, 6 November 2023 (2023-11-06), pages 195-201, XP034559109, DOI: 10.1109/CSCN60443.2023.10453214 [retrieved on 2024-03-04] * Sections I and II; figure 1 * ----- | 1-17 | |

**TECHNICAL FIELDS SEARCHED (IPC)**

H04W

The present search report has been drawn up for all claims

| Place of search | Date of completion of the search | Examiner |
|---|---|---|
| Munich | 19 January 2026 | Aguiar, Jorge |

## ANNEX TO THE EUROPEAN SEARCH REPORT
## ON EUROPEAN PATENT APPLICATION NO.

EP 25 20 0942

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2026

| Patent document cited in search report | | Publication date | Patent family member(s) | | Publication date |
|---|---|---|---|---|---|
| EP 4418617 | A1 | 21-08-2024 | EP | 4418617 A1 | 21-08-2024 |
| | | | US | 2024283712 A1 | 22-08-2024 |
| WO 2024158481 | A1 | 02-08-2024 | AU | 2023425904 A1 | 26-06-2025 |
| | | | CN | 120391077 A | 29-07-2025 |
| | | | EP | 4655978 A1 | 03-12-2025 |
| | | | JP | 2026500240 A | 06-01-2026 |
| | | | KR | 20250107247 A | 11-07-2025 |
| | | | US | 2025203505 A1 | 19-06-2025 |
| | | | WO | 2024158481 A1 | 02-08-2024 |

EPO FORM P0459

For more details about this annex : see Official Journal of the European Patent Office, No. 12/82